# EUROPEAN PATENT SPECIFICATION

(11) **EP 2 721 904 B1**
(45) Date of publication and mention of the grant of the patent: **24.02.2016**
(21) Application number: 11733928.3
(22) Date of filing: 20.06.2011
(51) Int. Cl.: H04W 88/08, H04W 52/02, H04W 24/04, H04W 16/08, H04W 28/08, H04W 36/22, H04L 1/22

(54) **METHODS AND ARRANGEMENTS TO SAVE ENERGY CONSUMPTION IN A NETWORK NODE**
VERFAHREN UND ANORDNUNGEN ZUR REDUZIERUNG DES ENERGIEVERBRAUCHS IN EINEM NETZWERKKNOTEN
PROCÉDÉS ET DISPOSITIONS POUR ÉCONOMISER DE L'ÉNERGIE DANS UN N UD DE RÉSEAU

(43) Date of publication of application: 23.04.2014
(73) Proprietor: Telefonaktiebolaget LM Ericsson (publ), 164 83 Stockholm (SE)
(72) Inventor: NORMAN, Mårten, SE-163 54 Spånga (SE); SÖDERLUND, Annie, SE-192 66 Sollentuna (SE)
(74) Representative: Brann AB
(86) International application number: PCT/SE2011/050803
(87) International publication number: WO 2012/177191

(56) References cited:
- EP-A2- 1 841 159
- WO-A1-2009/115554
- WO-A2-2008/030171
- US-A1- 2010 061 226
- US-A1- 2010 151 908

## Description

### TECHNICAL FIELD

The present disclosure describes a method and arrangement in a network node. In particular it relates to preparations of powering down of a first module of a controlling part comprised in the network node.

### BACKGROUND

User equipment (UE), also known as mobile stations, wireless terminals and/or mobile terminals are enabled to communicate wirelessly in a wireless communication system, sometimes also referred to as a cellular radio system. The communication may be made e.g. between two user equipment units, between a user equipment and a regular telephone and/or between a user equipment and a server via a Radio Access Network (RAN) and possibly one or more core networks.

The user equipment units may further be referred to as mobile telephones, cellular telephones, laptops with wireless capability. The user equipment units in the present context may be, for example, portable, pocket-storable, hand-held, computer-comprised, or vehicle-mounted mobile devices, enabled to communicate voice and/or data, via the radio access network, with another entity, such as another user equipment or a server.

The wireless communication system covers a geographical area which is divided into cell areas, with each cell area being served by a network node, or base station e.g. a Radio Base Station (RBS), which in some networks may be referred to as "eNB", "eNodeB", "NodeB" or "B node", depending on the technology and terminology used. The network nodes may be of different classes such as e.g. macro eNodeB, home eNodeB or pico base station, based on transmission power and thereby also cell size. A cell is the geographical area where radio coverage is provided by the network node/ base station at a base station site. One base station, situated on the base station site, may serve one or several cells. The network nodes communicate over the air interface operating on radio frequencies with the user equipment units within range of the respective network node.

In some radio access networks, several network nodes may be connected, e.g. by landlines or microwave, to a Radio Network Controller (RNC) e.g. in Universal Mobile Telecommunications System (UMTS). The RNC, also sometimes termed a Base Station Controller (BSC) e.g. in GSM, may supervise and coordinate various activities of the plural network nodes connected thereto. GSM is an abbreviation for Global System for Mobile Communications (originally: Groupe Special Mobile).

In 3rd Generation Partnership Project (3GPP) Long Term Evolution (LTE), network nodes, or base stations, which may be referred to as eNodeBs or even eNBs, may be connected via a gateway e.g. a radio access gateway, to one or more core networks.

UMTS is a third generation mobile communication system, which evolved from the GSM, and is intended to provide improved mobile communication services based on Wideband Code Division Multiple Access (WCDMA) access technology. UMTS Terrestrial Radio Access Network (UTRAN) is essentially a radio access network using wideband code division multiple access for user equipment units. The 3GPP has undertaken to evolve further the UTRAN and GSM based radio access network technologies.

The 3GPP is responsible for the standardization of e.g. GSM, UMTS and LTE. LTE is a technology for realizing high-speed packet-based communication that may reach high data rates both in the downlink and in the uplink, and is thought of as a next generation mobile communication system relative UMTS.

In the present context, the expressions downlink, downstream link or forward link may be used for the transmission path from the network node to the user equipment. The expression uplink, upstream link or reverse link may be used for the transmission path in the opposite direction i.e. from the user equipment to the network node.

There may be a general desire to save energy consumption in a base station.

The load of a typical base station varies over time. Hence there is need for a high capacity during busy hours while the demand may be significantly lower during other periods. There may also be significant change of load in shorter time spans i.e. from one minute to another. However, some of the components comprised in the base station may utilize a significant amount of energy, even if there is little traffic load. A possible concept of reducing the energy consumption of the base station may be to shut down the base station when it is not used, or shut down parts of the base station when the traffic load is low.

With known prior art base stations, it is not possible, or at least not convenient to easily shut down parts of a base station to save power and at the same time supply the user equipment with the same accessibility, i.e. maintained coverage and functions but reduced capacity in number of user equipment units. Until now, the main power consumers in a base station have been the radio units, but with the large amount of base band processing the Digital Unit, DU, has become a larger power consumer as well.

As discussed, the support for reallocation of resources without taking down whole cells is limited, not only in the radio unit but also within the digital unit. However, to power down one digital unit would result in dropped cells and dropped calls, which is clearly undesired.

EP1,841,159A2 relates to a radio communication apparatus in which power consumption is reduced. US2010/061226A1 relates to providing redundancy control and session restoration in an access gateway apparatus. WO2009/115554A1 relates to a mechanism for automated re-configuration of an access network element.

It may thus be a desire to quickly shutdown parts of the base station, without lost calls within the cell, or at least with reduced lost calls and then quickly reactivate them again in a convenient manner.

### SUMMARY

It is therefore an object to obviate at least some of the above mentioned disadvantages and to improve the performance in a wireless communication system.

According to a first aspect, the object is achieved by a method in a network node. The method aims at preparing powering down of a first module of a controlling part, comprised in the network node. The network node also comprises a radio transceiving part. Further, the controlling part is configured to run processes for controlling radio transmission over the radio transceiving part. The controlling part further comprises a second module. The method comprises determining to power down the first module of the controlling part. Further the method comprises identifying a process in the first module that is utilized for controlling radio transmission over a common channel in the radio transceiving part. Also, the method further comprises mirroring the identified process in the first module over to the second module of the controlling part. In further addition, the method comprises switching to control the radio transmission over the common channel in the radio transceiving part from the mirrored process running on the second module.

According to a second aspect, the object is achieved by an arrangement in a network node. The arrangement aims at preparing powering down of a first module of a controlling part comprised in the network node. The network node also comprises a radio transceiving part. The controlling part is configured to run processes for controlling radio transmission over the radio transceiving part. Further the controlling part also comprises a second module. The arrangement comprises a processing circuit, configured to determine to power down the first module of the controlling part. The processing circuit is also configured to identify a process in the first module that is utilized for controlling radio transmission over a common channel in the radio transceiving part. In further addition, is the processing circuit also configured to mirror the identified process in the first module over to the second module of the controlling part. Additionally, the processing circuit is furthermore configured to switch to control the radio transmission over the common channel in the radio transceiving part from the mirrored process running on the second module.

Thereby, thanks to embodiments of the present methods and arrangements, the network node may be prepared for powering down of the first module of the controlling part comprised in the network node, enabling powered down without interrupting the operation of the network node. This may have a plurality of advantages such as e.g. making it possible to reduce energy costs, reduce cost of batteries in solar powered systems by reducing power need during the night, increase the operation time on back up batteries, reducing need of cooling when the cooling system is broken or at extreme heat, possible to save cost by under dimensioning the cooling system and handling heat peaks by powering down parts of the network node. In addition, maintenance and upgrading may be performed without taking down traffic.

Other objects, advantages and novel features will become apparent from the following detailed description of the present method and arrangement.

### BRIEF DESCRIPTION OF THE DRAWINGS

The methods and arrangements are described in more detail with reference to attached drawings illustrating exemplary embodiments in which:
- Figure 1A: is a schematic block diagram illustrating a wireless communication system according to some embodiments.
- Figure 1B: is a schematic block diagram illustrating a wireless communication system according to some embodiments.
- Figure 2: is a schematic block diagram illustrating a network node according to some embodiments.
- Figure 3: is a schematic block diagram illustrating a network node according to some embodiments.
- Figure 4A: is a schematic block diagram illustrating a network node according to some embodiments.
- Figure 4B: is a schematic block diagram illustrating a network node according to some embodiments.
- Figure 5A: is a schematic block diagram illustrating a network node according to some embodiments.
- Figure 5B: is a schematic block diagram illustrating a network node according to some embodiments.
- Figure 6A: is a schematic block diagram illustrating a network node according to some embodiments.
- Figure 6B: is a schematic block diagram illustrating a network node according to some embodiments.
- Figure 7A: is a schematic block diagram illustrating a network node according to some embodiments.
- Figure 7B: is a schematic block diagram illustrating a network node according to some embodiments.
- Figure 8A: is a schematic block diagram illustrating a network node according to some embodiments.
- Figure 8B: is a schematic block diagram illustrating a network node according to some embodiments.
- Figure 8C: is a schematic block diagram illustrating a network node according to some embodiments.
- Figure 8D: is a schematic block diagram illustrating a network node according to some embodiments.
- Figure 8E: is a schematic block diagram illustrating a network node according to some embodiments.
- Figure 8F: is a schematic block diagram illustrating a network node according to some embodiments.
- Figure 9A: is a schematic block diagram illustrating a network node according to some embodiments.
- Figure 9B: is a schematic block diagram illustrating a network node according to some embodiments.
- Figure 9C: is a schematic block diagram illustrating a network node according to some embodiments.
- Figure 10: is a schematic flow chart illustrating an embodiment of the method.
- Figure 11: is a schematic flow chart illustrating an embodiment of the method.
- Figure 12: is a schematic flow chart illustrating an embodiment of the method.
- Figure 13: is a schematic flow chart illustrating an embodiment of the method.
- Figure 14: is a schematic flow chart illustrating an embodiment of the method.
- Figure 15: is a schematic flow chart illustrating an embodiment of the method.
- Figure 16: is a schematic block diagram illustrating an embodiment of an arrangement in a network node.

### DETAILED DESCRIPTION

Embodiments herein are defined as a method and an arrangement in a network node, which may be put into practice in the embodiments described below. These embodiments may, however, be exemplified and realised in many different forms and are not to be considered as limited to the embodiments set forth herein; rather, these embodiments are provided so that this disclosure will be thorough and complete.

Still other objects and features may become apparent from the following detailed description considered in conjunction with the accompanying drawings. It is to be understood, however, that the drawings are designed solely for purposes of illustration and not as a definition of the limits of the herein disclosed embodiments, for which reference is to be made to the appended claims. It is further to be understood that the drawings are not necessarily drawn to scale and that, unless otherwise indicated, they are merely intended to conceptually illustrate the structures and procedures described herein.

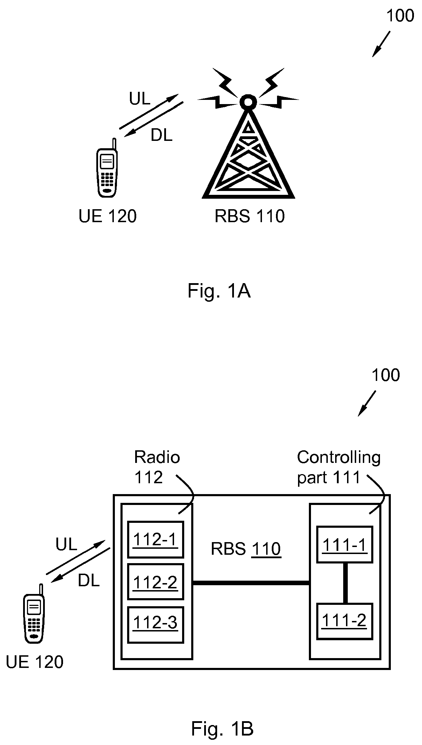

**Figure 1A** depicts a wireless communication system 100. The wireless communication system 100 may at least partly be based on radio access technologies such as e.g. 3GPP LTE, LTE-Advanced, Evolved Universal Terrestrial Radio Access Network (E-UTRAN), UMTS, GSM/ Enhanced Data rate for GSM Evolution (GSM/EDGE), Wideband Code Division Multiple Access (WCDMA), Worldwide Interoperability for Microwave Access (WiMax), or Ultra Mobile Broadband (UMB), Evolved Universal Terrestrial Radio Access (E-UTRA), Universal Terrestrial Radio Access (UTRA), GSM EDGE Radio Access Network (GERAN), 3GPP2 CDMA technologies e.g. CDMA2000 1x RTT and High Rate Packet Data (HRPD), just to mention some few options.

The wireless communication system 100 may be configured to operate according to the Time Division Duplex (TDD) and/or the Frequency Division Duplex (FDD) principle, according to different embodiments.

TDD is an application of time-division multiplexing to separate uplink and downlink signals in time, possibly with a guard period situated in the time domain between the uplink and downlink signalling. FDD means that the transmitter and receiver operate at different carrier frequencies.

The purpose of the illustration in Figure 1A is to provide a simplified, general overview of the methods and arrangements herein described, and the functionalities involved. The methods and arrangements will herein, as a non-limiting example, be described in a 3GPP/LTE environment.

The wireless communication system 100 comprises at least one network node 110 and one or more user equipment 120, arranged to communicate with each other. The network node 110 may communicate with the user equipment 120 over a first link.

The user equipment 120 is situated in a cell, served by the network node 110. However, the user equipment 120 may move and enter another cell, served by another network node. The user equipment 120 is configured to transmit radio signals comprising information to be received by the network node 110. Contrariwise, the user equipment 120 is configured to receive radio signals comprising information transmitted by the network node 110.

It is to be noted that the illustrated network setting of network node 110 and user equipment 120 in Figure 1A is to be regarded as a non-limiting example of an embodiment only. The wireless communication network 100 may comprise any other number and/or combination of network nodes 110 and/or user equipment units 120, although only one instance of a user equipment 120 and one instance of a network node 110, respectively, are illustrated in Figure 1A for clarity reasons. A plurality of network nodes 110 and/or user equipment units 120 may further be involved in the present methods according to some embodiments.

Thus whenever "one" or "a/an" network node 110 and/or user equipment 120 is referred to in the present context, a plurality of network nodes 110 and/or user equipment units 120 may be involved, according to some embodiments.

The network node 110 may according to some embodiments be referred to as e.g. base station, NodeB, evolved Node B (eNB, or eNode B), base transceiver station, Access Point Base Station, base station router, Radio Base Station (RBS), macro base station, micro base station, pico base station, femto base station, Home eNodeB, sensor, beacon device or any other network node configured for communication with the user equipment 120 over a wireless interface, depending e.g. of the radio access technology and terminology used.

In the subsequent part of the disclosure, in order to not unnecessarily complicate the explanation, the methods and arrangements in the scenario depicted in Figure 1A will be described, wherein the term "network node", or "base station" will be used for the network node 110, in order to facilitate the comprehension of the present methods.

The user equipment 120 may be represented by e.g. a wireless communication terminal, a mobile cellular phone, a Personal Digital Assistant (PDA), a wireless platform, a mobile station, a portable communication device, a laptop, a computer, a wireless terminal acting as a relay, a relay node, a mobile relay, a Customer Premises Equipment (CPE), a Fixed Wireless Access (FWA) nodes or any other kind of device configured to communicate wirelessly with the network node 110.

The network node 110 controls the radio resource management within the cell, such as e.g. allocating radio resources to the user equipment units 120 within the cell and ensuring reliable wireless communication link between the network node 110 and the user equipment 120.

Embodiments of the methods and arrangements herein are dedicated towards sustainability in general and power saving within the network node 110. Enablement for high signalling capacity within the network node 110, or base station, may in general also increase the power consumption of the network node 110. Hence it may be useful both for saving energy costs and for saving environment that the network node 110 is able to reduce its power consumption during periods when all capacity is not needed. Thus it will be presented herein, embodiments enabling activation/deactivation of parts of the network node 110 during normal operation, i.e. without interrupting the service, or, alternatively, interrupting the service for a reduced number of user equipment 120, or in some embodiments, interrupting the service for a reduced period of time in relation to any prior art methods.

It will subsequently be further described a way to create or configure the network node 110 with ability to power down parts or modules comprised therein, that are not needed, with no, or for some embodiments negligible, interference on ongoing traffic. It will also be described how to reactivate the parts again with similar negligible or no impact on ongoing traffic, according to some embodiments.

Embodiments herein are focused on concentrating usage of units, entities, and/or modules when the resource need is low with negligible or no interrupt of ongoing traffic and/or downtime. Further, embodiments herein concern changing the network node 110 from multi-sector mode to omni-sector mode, thereby reducing the number of radio units needed for transmission and/or reception of wireless signals. The change from multi-sector mode to omni-sector mode may be made when the power need is low with negligible or no interrupt of ongoing traffic and/or downtime according to some embodiments. Thereby may energy be saved, and/or service/reparation of parts of the network node 110 may be enabled.

Firstly however, before going into further details of functionalities of any method embodiments, the interior of the network node 110 will be schematically presented in **Figure 1B**.

**Figure 1B** depicts a wireless communication system 100 similar to, or identical with, the system 100 illustrated in Figure 1A. However, the interior of an embodiment of the network node 110 is here revealed, wherein the network node 110 comprises a controlling part 111. The controlling part 111 may comprise a first module 111-1 and a second module 111-2.

Further, the controlling part 111 may comprise an interconnection between the controlling modules 111-1, 111-2. This interconnection may be utilized for internal communication between the controlling modules 111-1, 111-2, making it possible for them to distribute processing etc. between them. The cabling in Figure 1B is an example, indicating that the controlling modules 111-1, 111-2 may be connected to each other.

Further the network node 110 may comprise a radio transceiving part 112, which radio transceiving part 112 in turn may comprise a plurality of modules 112-1, 112-2, 112-3. The controlling part 111 is configured to control the radio transmission over the radio transceiving part 112.

It is to be noted that the herein described number of modules 111-1, 111-2 comprised in the controlling part 111 is merely an example as the general concept disclosed herein is completely scalable. The controlling part 111 may thus comprise some singular modules 111-1, 111-2, some tenths of modules 111-1, 111-2, some hundreds of modules 111-1, 111-2 or some thousands of modules 111-1, 111-2 according to different embodiments. The plurality of modules 111-1, 111-2 may also be different in terms of capacity and functions such as e.g. there may be two, five or hundred variants of modules 111-1, 111-2 where the only significant property in relation to the disclosed embodiments is that at least one of them may be powered down without making the controlling part 111 unable to serve at least one or a few user equipment units 120. However, to simplify the presentation of embodiments of the methods herein, only two modules 111-1, 111-2 are depicted and discussed subsequently.

Thus the first module 111-1 and the second module 111-2 of the controlling part 111 may comprise any of e.g. separate digital units, cables, driver circuits, one or more parts of one or more circuit boards, one or more chips, central processing units, memories and/or processing circuits. Further, the controlling part 111 may comprise a plurality of modules 111-1, 111-2 situated on the same physical unit. In addition, according to some embodiments, the plurality of modules 111-1, 111-2 within the controlling part 111 may in turn be divided into further sub parts.

Some embodiments of the method may be based on at least two sets of configurations. One first configuration optimized for low power consumption while the second configuration is optimized for performance. Embodiments of the method may comprise swapping between configurations optimized for power versus capacity.

Some typical features of the first configuration optimized for low power consumption may be that the capacity and/or range of the network node 110 are limited since the load, i.e. the number of subscribers and traffic, is expected to be low during the period. The power down strategy may comprise to concentrate all usage of hardware to few modules 111-1, 111-2, 112-1, 112-2, 112-3, such as the first module 111-1, and power down the other units modules 111-1, 111-2, 112-1, 112-2, 112-3, such as e.g. the second module 111-2. As much parts of the network node 110 as possible may be powered down, according to some embodiments.

The second configuration of the network node 110 may be optimized for performance. Some possible features of such configurations may be that the network node 110 is configured to handle as much traffic as possible, or at least intense wireless traffic. The strategy may be to distribute hardware usage over as many units, or modules 111-1, 111-2, 112-1, 112-2, 112-3 as possible in order to keep overload and bottlenecks local rather than impacting the total performance of the network node 110. All units/ modules 111-1, 111-2, 112-1, 112-2, 112-3 may be powered and active. Alternatively, one or more configuration may be a mix of the configurations above, or target other parameters such as for example to be optimized for 50% load, only voice traffic is allowed or one sector is powered down, such as e.g. an antenna pointing to a closed shopping mall, between some periods in time.

Thereby, according to some embodiments, the network node 110 may be powered down without interrupting the operation of the network node 110. This may have a plurality of advantages such as e.g. making it possible to reduce energy costs, reduce cost of batteries in solar powered systems by reducing power need during the night, increase the operation time on back up batteries, reducing need of cooling when the cooling system is broken or at extreme heat, possible to save cost by under dimensioning the cooling system and handling heat peaks by powering down parts of the network node 110. In addition, maintenance and upgrading may be performed without taking down traffic.

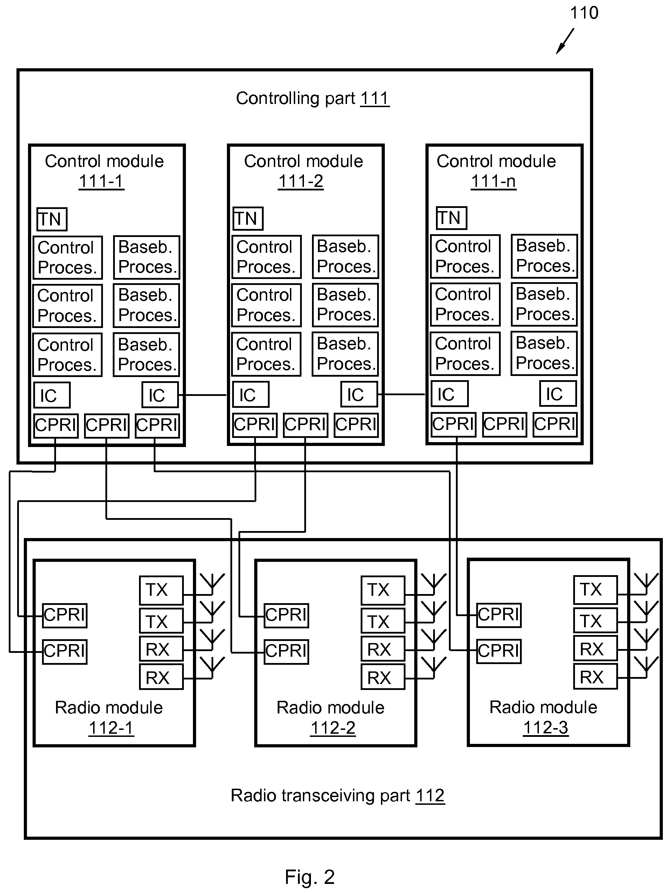

**Figure 2** depicts the network node 110 according to an embodiment, wherein the therein comprised controlling part 111 and radio transceiving part 112 are further disclosed. An example embodiment of the interconnections between the first and second control modules 111-1, 111-2, and the radio transceiving modules 112-1, 112-2, 112-3 is further disclosed.

The Transport Network part (TN) in the controlling part 111 may connect the network node 110 to other network nodes in the RAN, while the InterConnect part (IC) interconnects the control modules 111-1, 111-2. This embodiment provides a Transport Network part in each control module 111-1, 111-2, but there may be other embodiments with a Transport Network part in just one or a subset of the control modules 111-1, 111-2.

The radio transceiving part 112 and the therein possibly comprised modules 112-1,112-2, 112-3, according to some embodiments are configured to communicate wirelessly with the user equipment 120. The radio transceiving part 112 may be separated from the controlling part 111, according to some embodiments, since radio transceivers tend to exist in several variants with different output power, frequency band etc, why it may be separated from the controlling part 111 with some advantage, according to embodiments.

The radio transceiving part 112 comprises one or more radio transmitters. For example one transmitter embodiment may share parts like e.g. a multi-carrier power amplifier, which make them non-independent. Correspondingly, the radio transceiving part 112 may comprise one or more receivers.

Yet, the radio transceiving part 112 and the therein possibly comprised modules 112-1, 112-2, 112-3, may be connected to the controlling part 111 and the therein possibly comprised controlling modules 111-1, 111-2, e.g. by a Common Public Radio Interface (CPRI), according to some embodiments. However, the controlling part 111 and the radio transceiving part 112 may be connected in a plurality of ways, according to different embodiments.

The cables between the CPRI connections may be an example of a configuration where the radio transceiving part 112 and the therein comprised modules 112-1, 112-2, 112-3 may be controlled by one control module 111-1, 111-2 each, according to some embodiments, or controlled by a single control module 111-1 during low traffic load.

The controlling part 111, and/or the first module 111-1 and the second module 111-2 comprised therein perform traffic and control processing within the network node 110. A large network node 110, which may handle several cells and/or lots of traffic, may comprise several controlling modules 111-1, 111-2, which may be implemented as separate, but interconnected, physical units sharing the load. A small network node 110 may instead comprise a control module 111-1, 111-2 and a radio transceiving module 112-1, 112-2, 112-3 in one physical unit.

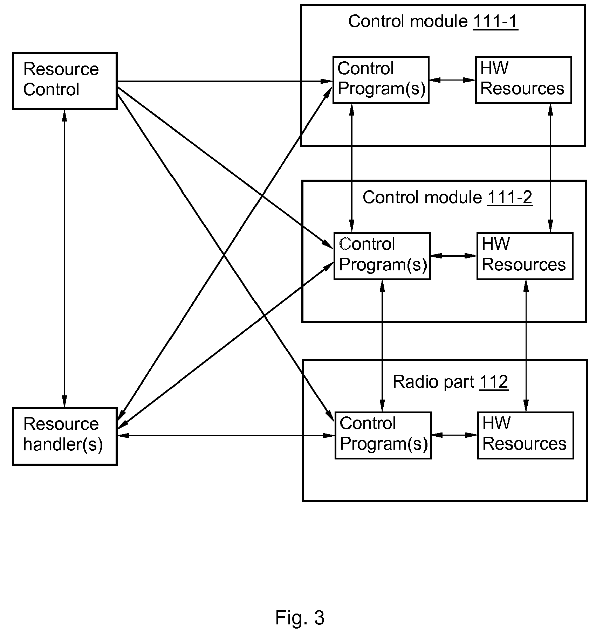

**Figure 3** depicts the network node 110 according to an embodiment, wherein resource control and resource handler functionalities are further presented and discussed.

The resource control may be configured to manage all kinds of resources in the network node 110. The resources may comprise e.g. hardware such as Random Access Memory (RAM), physical cables and Central Processing Unit (CPU) cycles, but they are generally worked up to higher level items e.g. an encoder for a radio stream, where one or several such encoders may be utilised for each connection of the user equipment 120 and may be built from a fraction of the hardware resources such as e.g. CPU cycles, RAM and Digital Signal Processing (DSP) cycles.

Some embodiments of resource controller may also be configured to handle hardware and software failures, by informing software processes that are using hardware/software that has failed hence allowing those processes to attempt recovery by allocating new resources to replace the failed ones. Similar mechanisms may also be used for deactivating hardware/software in order to remove it, reconfigure it or to save energy and/or distribute component wear and/or aging.

The resource control may comprise, according to some embodiments, a software program executing in one or more processor on the control module 111-1, 111-2. However, according to some embodiments, the resource control may comprise pure hardware within the radio part 112, or the control part 111 within the network node 110, or out of the network node 110, i.e. distant from the network node 110 in for example the core network or at the O&M Network Operating Centre. Further, the resource control may also be a part of another software program or be a distributed program running over several CPUs and nodes according to some embodiments.

The resource handler may comprise functions such as maintaining a list of available hardware and software resources in the network node 110. Typical resources may be e.g. baseband processing capacity and processing elements, radio bandwidth and power, computer memory etc.

The resource handler may be queried for location and availability of free resources. It may also, in some embodiments, be used to track the software process using the resource, which in turn makes it possible to request said process to release the resource and, in some embodiments, negotiate with said process to use other resources instead.

The control programs may handle control of the network node 110, e.g. by controlling calls and data traffic etc. The Resource Controller and the Resource Handler may comprise Control Programs, according to some embodiments.

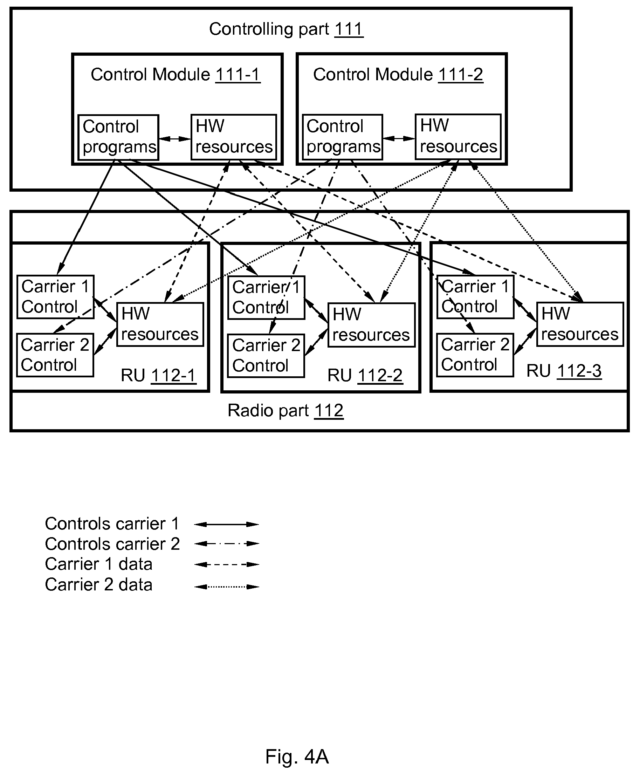

Turning now to **Figure 4A**, it is there illustrated a non-limiting example of a network node 110 comprising the controlling part 111, which in turn comprises control modules 111-1, 111-2, and a radio part 112, comprising three radio modules 112-1, 112-2, 112-3, operating two carriers. The network node 110 illustrated in Figure 4A is configured for optimized performance. Each of the radio modules 112-1, 112-2, 112-3 is connected to an antenna or group of antennas (not shown) aimed in one direction. In WCDMA terms, each radio module 112-1, 112-2, 112-3 handles one sector, with two carriers in each sector.

The first control module 111-1 is responsible for carrier 1, while the second control module 111-2 is responsible for carrier 2. Hence the control program(s) in each respective control module 111-1, 111-2 is responsible for using the baseband hardware resources in the local module 111-1, 111-2 for handling the carrier. Also, each respective control module 111-1, 111-2 is responsible for communicating with control programs in each radio module 112-1, 112-2, 112-3 for handling the carrier. The hardware resources (baseband) in each of control modules 111-1, 111-2 are also exchanging I/Q modulation data, such as e.g. CPRI with each radio module 112-1, 112-2, 112-3 in order to modulate/demodulate radio connections related to user equipment 120 connections over the carrier.

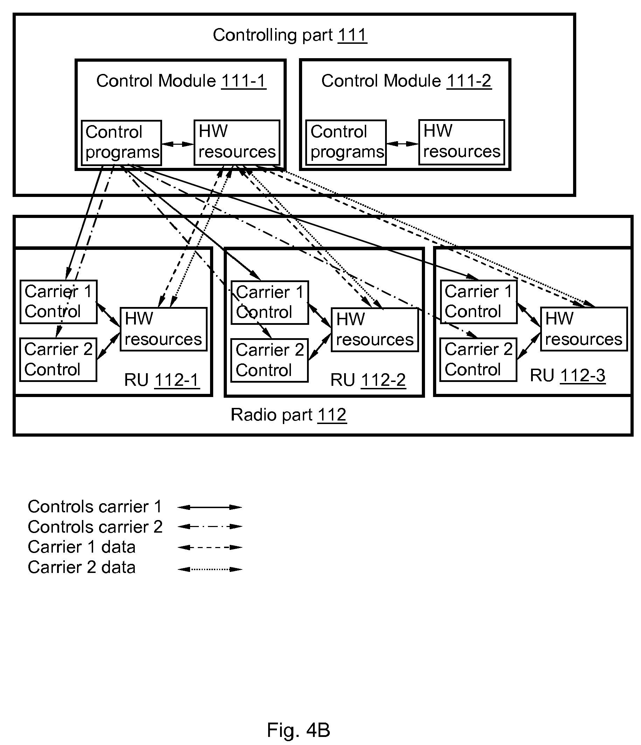

Referring to **Figure 4B**, illustrating a network node 110 configured for low power consumption. The figure 4B is similar to Figure 4A, except that the first control module 111-1 is operating both the carriers, carrier 1 and carrier 2.

The main difference is that two carriers may share the hardware capacity of one of the control modules 111-1, 111-2. There may be capacity enough to carry traffic on both carriers, but the total capacity of the network node 110, such as i.e. the number of connections and/or total data rate may be lower.

Note: there may appear a desire to maintain all carrier frequencies, also when traffic load is low on all carriers, due to cell planning and handover patterns. In WCDMA for example, it is preferred to perform soft handover i.e. to stay on the same frequency when moving to another cell rather than change to a new frequency.

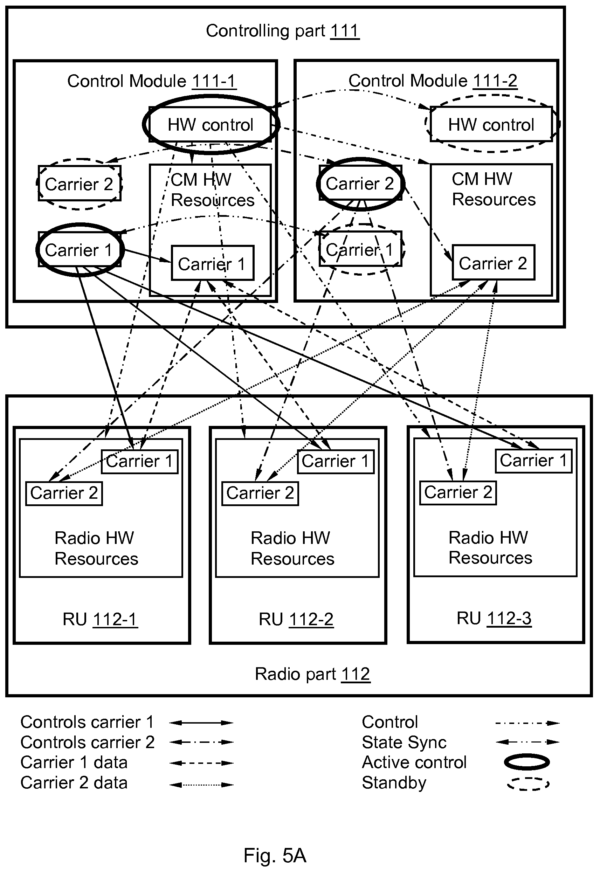

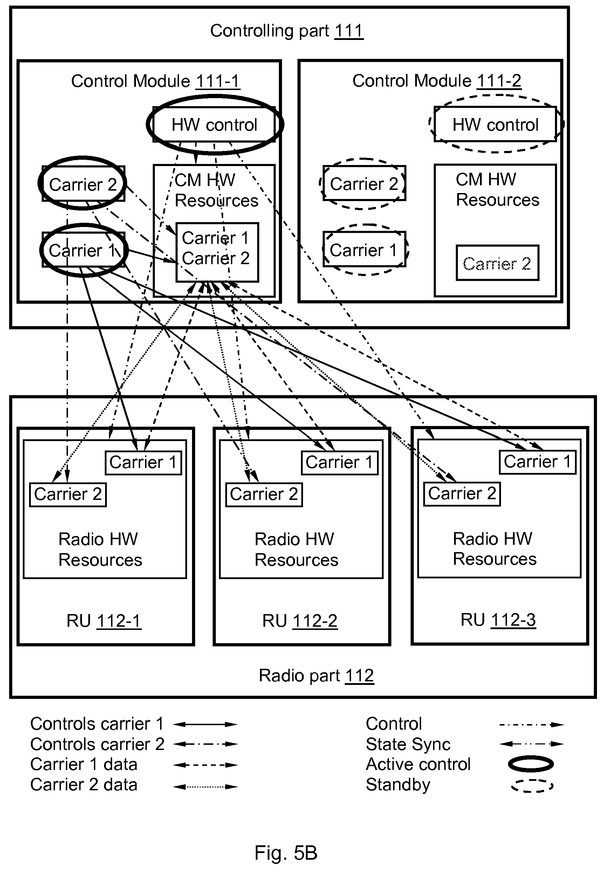

Turning now to **Figure 5A** and **Figure 5B**, which shows the network node 110 in Figure 4A and Figure 4B, but on its way to perform a seamless switching of control of radio resources between the control modules 111-1, 111-2.

Warm Standby control software may be implemented by running two copies of each control program; one in each control module 111-1, 111-2; where one control module 111-1, 111-2 is active while the other one is standby, but is synchronized with the active one and hence prepared to take over immediately, on command or if the active control program goes down, according to some embodiments.

This mechanism makes it possible to quickly transfer control of for example a carrier or hardware resources from one control modules 111-1, 111-2 to the other. Embodiments of the method relies on this mechanism, but may add functions to transfer control with negligible or no downtime for the carrier.

Referring to Figure 5A illustrates some details of the control programs, according to an embodiment. Both control modules 111-1, 111-2 may have the same set of programs, but the one control module 111-1, 111-2 is active while the other one is standby and synchronized with its active peer. Thereby may a performance optimized configuration be achieved.

In the embodiment illustrated in Figure 5B, here one control module 111-1, 111-2 is operating both carriers. The main difference is that carrier 2 is now handled by the first control module 111-1, where the standby control program for carrier 2 has taken over control from its peer in the second control module 111-2, according to an embodiment.

In order to move from the state illustrated in **Figure 5A**, to the state illustrated in **Figure 5B** without taking down the cells, in order to move carrier 2, there may be a desire for switching functions, as will be further described subsequently.

To be able to switch the software control between the control modules 111-1, 111-2, all programs in the second control module 111-2 is to be replaced by a peer in the first control module 111-1.

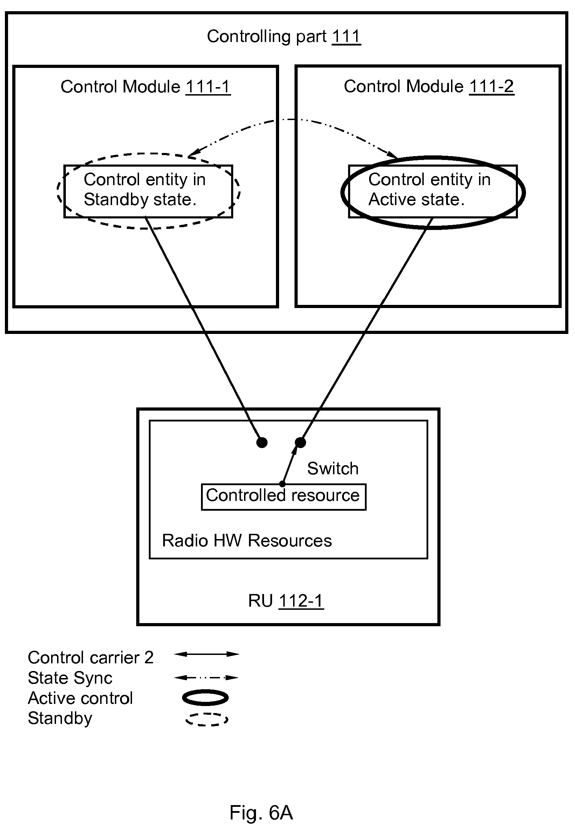

**Figure 6A** shows two synchronized peer control modules 111-1, 111-2 with redundant control software. It does also show a switch in the radio part 112, indicating that the resource(s) and/or program(s) in the radio part 112 are able to communicate with either of the peer control modules 111-1, 111-2 and may switch between them. It may be noted that carrier 1 is controlled by the first control module 111-1 while carrier 2 is controlled by the second control module 111-2. It may further be noted that carrier 2 depends on hardware resources in the second control module 111-2. Thereby, a switching is enabled, allowing a (hot) standby program in another control module 111-1, 111-2 to take over control with a negligible interrupt in service or no interrupt at all, according to some embodiments.

Hence it is possible for the peer control modules 111-1, 111-2 and the radio part 112 to agree upon a completely seamless, or at least almost seamless, depending on chosen implementation switch of control from the second control modules 111-2 to the first control module 111-1.

Embodiments of the switch sequence may comprise e.g. a command sequence sent from a control program or from one of the involved programs. Alternatively, the involved programs may change roles during the sequence rather than having one of them in command during the full sequence.

Baseband processing may be switched by cloning the whole baseband according to some embodiments. All use of baseband resources in the second control modules 111-2 must be replaced by resources in the first control module 111-1.

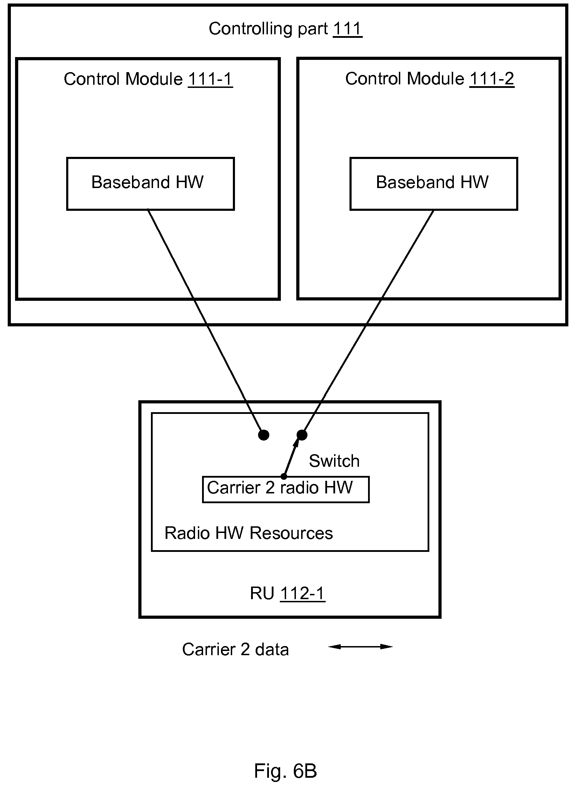

**Figure 6B** shows an embodiment where the carrier 2 cell for the radio part 112 may be handled in parallel by two cloned baseband processing chains in the first control module 111-1 and the second control module 111-2 during the switch, since it may be an advantage to have two identical streams, one from each control module 111-1, 111-2, active during the switch to avoid interrupted transmission. This embodiment may utilise a cloning process where the network node control creates a copy of the baseband configuration. During the process, the network node control may also prevent or handle that "the original" is changing configuration during the copy process - since "live" traffic is processed with moving user equipment 120 making handovers and calls are setup and taken down - resulting in added, removed or modified data streams that the baseband use for creating the carriers(s) to send/receive with the radio part 112.

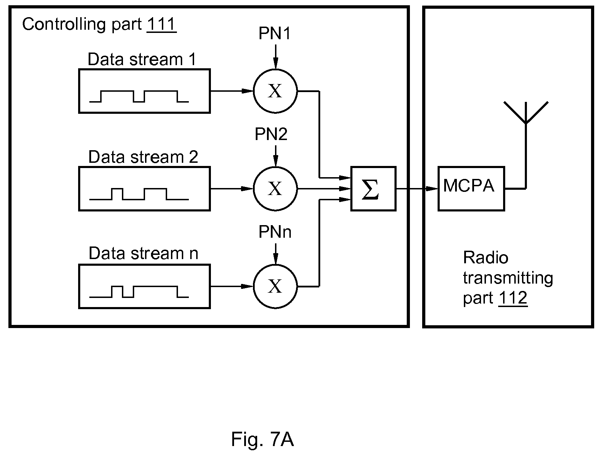

Figure 7A shows a non-limiting and partly simplified example on how the WCDMA carrier is modulated according to the 3GPP standard, typically using 5 MHz bandwidth. A number of data streams are encoded with pseudo-noise and merged into a radio signal that is transmitted. The pseudo-noise coding may be crafted in a way that makes it possible for the user equipment 120 to receive and decode one or several of the data streams according to some embodiments. Thereby switching of baseband by cloning small parts of the baseband may be enabled.

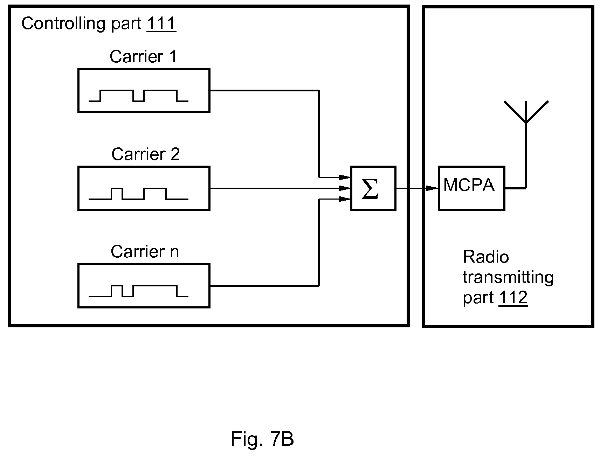

**Figure 7B** illustrates a scenario similar to the one already disclosed in Figure 7A, but in a GSM or LTE environment. Thus the data streams may be encoded (not shown) and/or time multiplexed into narrow band carriers such as e.g. 200 kHz for GSM, or 15 kHz for LTE that may be summed into a wideband signal, according to some embodiments.

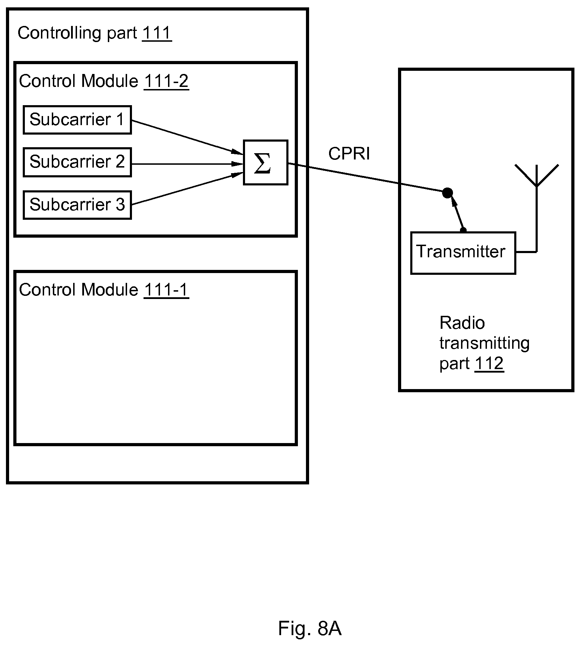

**Figure 8A** **-** **Figure 8E** are illustrating examples of different intermediate stages of a seamless move of carrier downlink from one control module 111-2 to another control module 111-1, comprised within the controlling part 111.

Thus these figures illustrate an example of the subcarrier encoding and the summation point implemented in a baseband. They also show a sequence that moves one part at a time. According to the illustrated embodiment, the moving of the carrier is performed in small steps. Thereby, the complexity of the method may be reduced, since each move is a small independent task. Further, it may be easier to abort the move if an exception happens and just try again later since each step is small and independent. This may result in small atomic transactions each leading closer to the desired state, or standing at the current state. However, according to some embodiments no going back towards the old state may be made. Another possible advantage of the present embodiment may be that the risk that the copying is disturbed from changed status in the copied part may be reduced, since the part copied is small. Thereby it takes little time to copy each small part of the baseband, and the risk of some unexpected event to happen in that little time may be small. Further, no hard time constraints may be necessary to apply, according to some embodiments since each step is atomic, i.e. the process may be halted at any step and resumed later, the only "cost" is some baseband and/or communication overhead during the process, but the process may not be reversed due to a halt, as might be the case in a "copy all" embodiment, where the copy may be kept synchronised with all of the original. Yet a possible advantage may be that a large part of the moves may be performed by just waiting a few minutes for the dedicated connections in the second control module 111-2 to end due to handover, hanged up calls etc. The only mandatory parts to move are the common channels since they are supposed to be active all the time, as the common channels may be considered to be the definition of a cell. If they do not exist, there is no cell. Still, there might be dedicated connections that have to be moved since a call or data connection may be up forever, or at least for a very long period of time.

It may here be explained that most cellular systems, such as e.g. GSM, WCDMA and LTE use a terminology that divide their channels in two classes; common channels and dedicated channels.

The common channels for radio signals may be considered as defining a cell, e.g. in WCDMA and LTE, or a group of carriers e.g. in GSM. Some examples of common channels may comprise some kind of broadcasted signal indicating to the user equipment 120, that the cell exist and relevant information for accessing it. Another example may comprise some shared access means where any user equipment 120 may indicate that it wants a connection. Further, a paging channel, broadcasting information that a user equipment 120 has a connection such as a call, waiting and that it may connect itself.

Without the common channel, it is more or less impossible for a user equipment 120 to use the cell since it may be "invisible" and there may be no way to start a connection to it.

The dedicated channel is dedicated to a single user equipment 120. Hence there are in general several dedicated channels available in a cell allowing a great number of user equipment 120 to be connected simultaneously. A dedicated connection may be made by requesting it from the common channel, when not connected. Alternatively, if the user equipment 120 already has a dedicated connection, it may negotiate, or determine, a transfer to another dedicated connection, typically a handover to another cell.

**Figure 8A** shows the state before starting to move the carrier, i.e. before the switching. Thus, the second control module 111-2 modulates the carrier before starting to move the carrier. One radio frequency carrier sent from the transmitter is generated from the second control module 111-2 (baseband). A number of subcarriers or encoded data streams are merged into one carrier signal that is forwarded to the radio transmitting part 112, for transmission over radio to the user equipment 120.

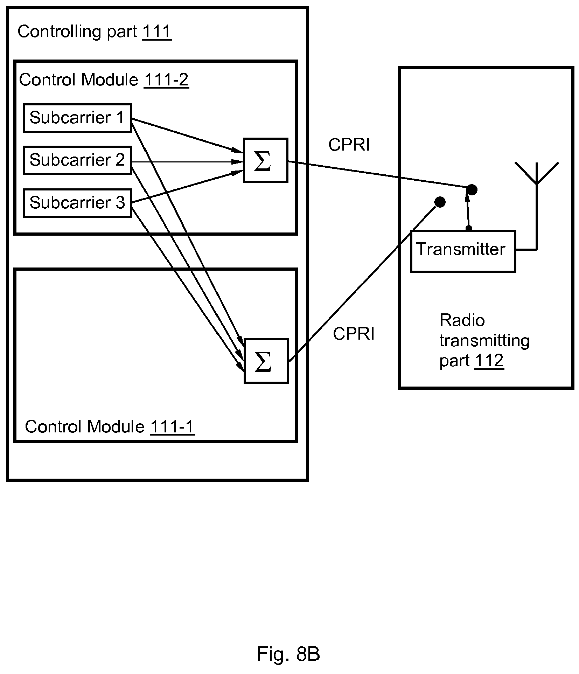

**Figure 8B** illustrates a state subsequent to the one illustrated in Figure 8A. The summation function is copied to the first control module 111-1 (baseband) and the input signals are sent to both summation functions of the first control module 111-1 and the second control module 111-2, respectively. Thus modulation data may be generated in both the second control module 111-2 and the first control module 111-1 that are copies of each other and sufficiently well aligned in time to allow a properly crafted radio transmitting part 112 to switch from one of the streams to the other one. A Common Public Radio Interface (CPRI), or equivalent connection may also be activated towards the radio transmitting part 112.

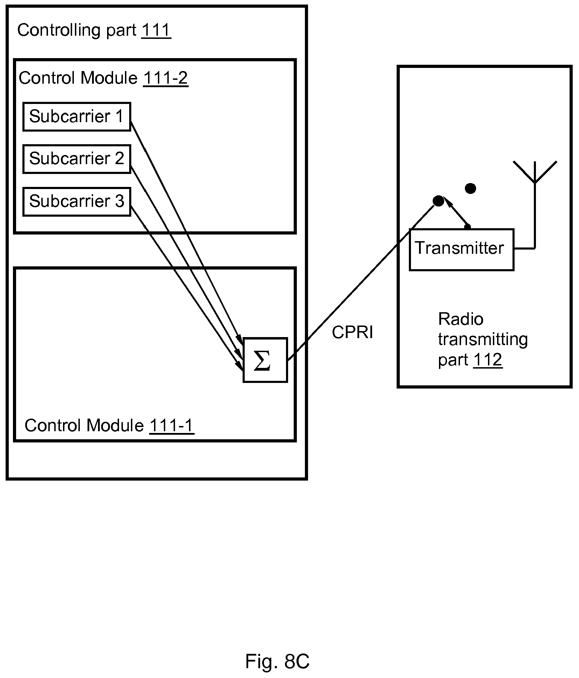

**Figure 8C** illustrates a state subsequent to the one illustrated in Figure 8B. Since the radio transmitting part 112 has two bit-exact copies of the input signal available, it is possible to switch the modulation source from the second control module 111-2, into the first control module 111-1. The summation point in the second control module 111-2 and its CPRI connection may at this moment become redundant and may be deactivated and/or have the resources removed.

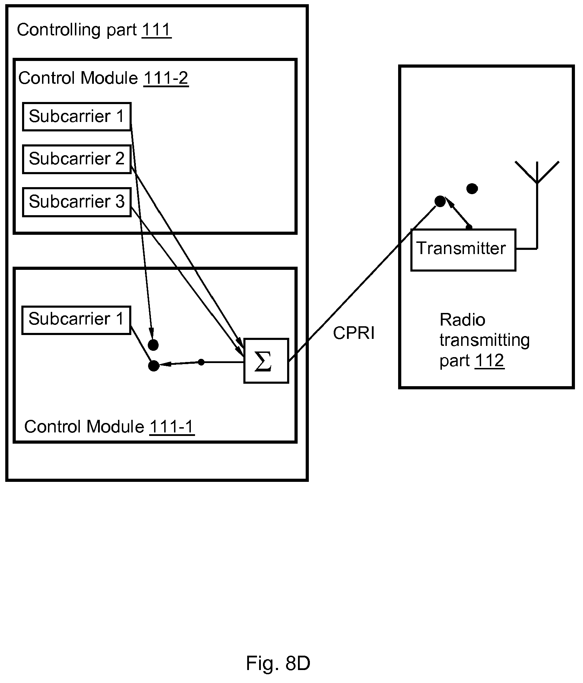

**Figure 8D** illustrates a state subsequent to the one illustrated in Figure 8C.

Subcarrier 1 has been copied to the first control module 111-1. Both copies may have the same input (not shown), but they receive user plane data from the transport network and may thereby create data that are exact copies. A switch function may thereafter switch between the sources, i.e. between the subcarrier 1 provided by the second control module 111-2 and the subcarrier 1 provided by the first control module 111-1. After the switch, the subcarrier 1 in the second control module 111-2 becomes redundant and may be deactivated and/or have the resources removed.

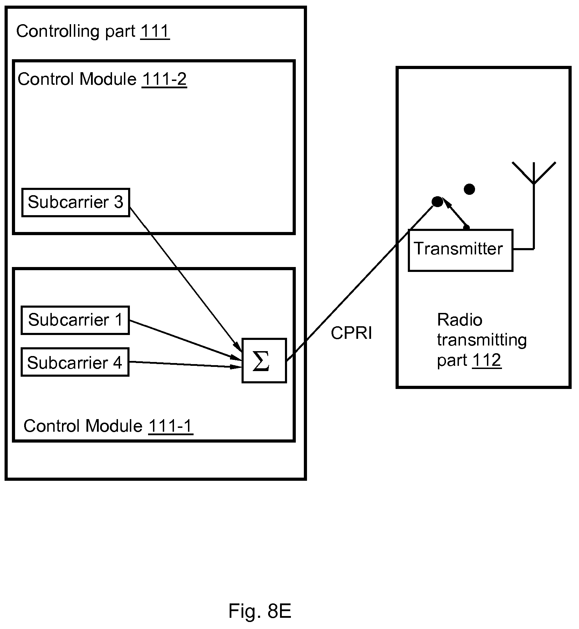

**Figure 8E** illustrates a state subsequent to the one illustrated in Figure 8D.

The move of subcarrier 1 is complete in the illustrated sequence. Subcarrier 2 has hanged up, and is thus not needed to move. Subcarrier 4 is newly created due to a new call that has been set up and which has been allocated directly in the first control module 111-1.

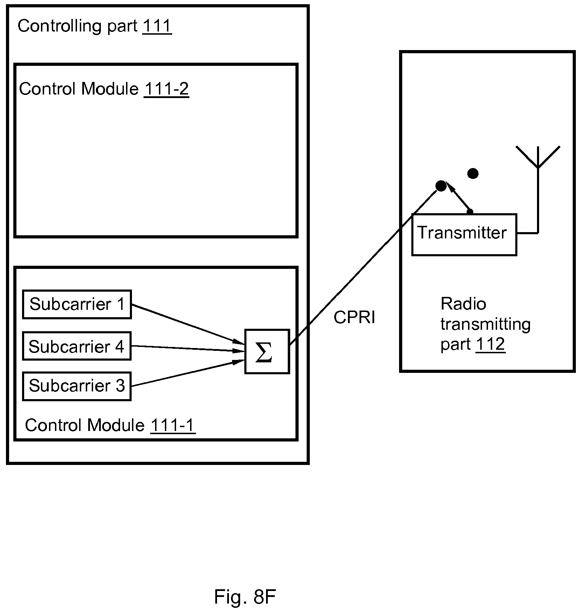

**Figure 8F** illustrates a state subsequent to the one illustrated in Figure 8E.

Subcarrier 3 has been copied in a similar way as already discussed in conjunction with Figure 8D, and the move has completed. The second control module 111-2 may then no longer be needed for modulating the radio transmitting part 112.

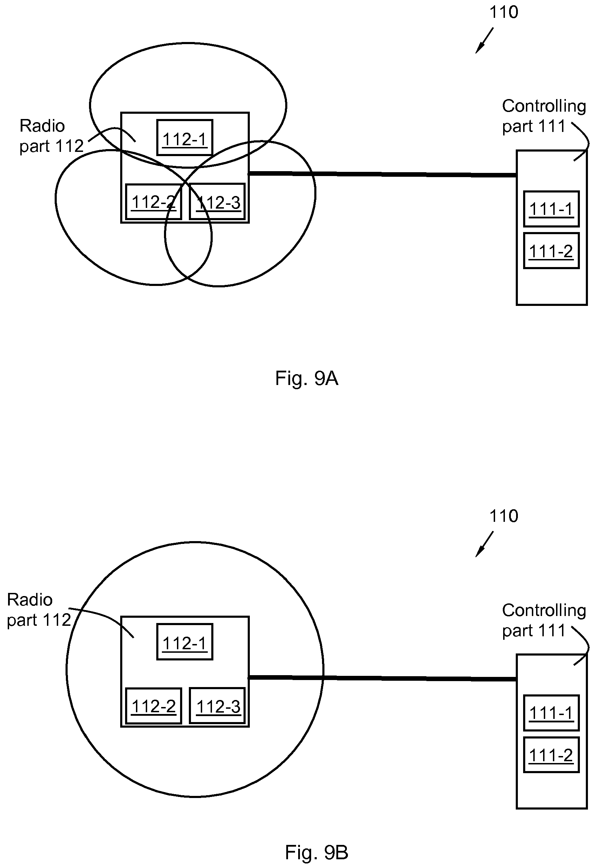

**Figure 9A** and also **Figure 9B** illustrates moving between omni-sector and multisector radio transmission of the radio transmitting part 112.

Directed antennas may be used in groups of three, each antenna covering 120 degrees each, summing up to 360 degrees that is equal to one omni-antenna since all directions are covered. The advantage of this solution is that three directed antennas may be mounted on one pole, while offering equal area coverage as three poles with omni-antennas would.

A WCDMA cellular system is built on cells and sectors, where a sector is an area covered by an antenna, or rather in most cases, group of coordinated antennas. The WCDMA sector may comprise one or a plural of cells, where each cell may be an independent entity defined by its Common channel(s). Cells in the same sector are separated in frequency. For LTE, there may be one cell in each sector. For GSM there may be carrier groups rather than cells, i.e. there may be one or a plural 200 KHz carriers in each sector that are associated with common channels that are transmitted on the carrier(s).

**Figure 9A** illustrates a network node 110 configured for multisector radio transmission using three radio modules 112-1, 112-2, 112-3. However, the network node 110 may comprise any number of radio modules 1-12 and even higher.

**Figure 9B** illustrates a network node 110 configured for omnisector radio transmission, using one radio module 112-1, 112-2, 112-3, or a few radio modules 112-1, 112-2, 112-3 if bridged or on different frequency bands.

Hence there are known means to toggle a network node configuration, by a relay or similar switch function, between using "several radios" and "a few radios" for covering an area. The "few radios" scenario is feasible when there is limited need for downlink power i.e. when the traffic load/demand is low enough to be fulfilled from one transmitter distributing its power over two or more sectors. While the "several radios" scenario may be appropriate for high traffic load and/or range.

A possible flow of method actions for moving from a state of multi-sector radio transmission to a state of omni-sector radio transmission will subsequently be further discussed. In the omni-sector radio transmission state, the network node 110 may utilize one radio module 112-1 for radio transmission in all sectors. Further, the omni-sector radio transmission state may be in particular feasible when the need for downlink power is low due to low traffic load/demand. Thus the present method may perform this switch without taking down the network node 110, i.e. without dropping calls.

Here follows the generic flow that may be modified into other embodiment variants.

Turning now to the illustrated multisector radio transmission mode in Figure 9A, each sector downlink may be fed by its own dedicated radio transmitting part 112.

The network node 110 may activate a new carrier in the sector. The new carrier may be an exact copy of the omnicell carrier that is created and transmitted in the sector according to some embodiments. This may however not be performed if the sector carrier is the one that will become the omnicell carrier. The embodiment relies on other sectors and/or neighbour cells provided by other network nodes 110 in the same RAN or another RAN to take over traffic.

The old carrier may be wilted. Other embodiments may employ other means of moving user equipment. The user equipment 120 using the old carrier, will find slowly degrading performance/metrics, eventually resulting in a handover to a better carrier, according to some embodiments.

Wilting is a controlled take down of a cell without dropping calls. The network node 110 may be ordered to or decide by itself to slowly decrease the cell output power, which slowly may decrease the useful size of the cell until it disappear, similar to a wilting flower, hence the name. Hence the cell may become more and more unattractive compared to other cells and eventually all user equipment 120 may hand over to other cells.

An advantage of wilting is that a rather trivial action like decreasing the output power results in a system response that may result in actions in the network node 110 which may be desirable for some embodiments. For example, the handover of the user equipment 120 to another cell may result in release of resources. However, other embodiments may utilise some other actions for achieving the same or similar effect, such as for example inserting bit errors or noise in the cell's or stream's uplink or downlink, according to some alternative embodiments.

Blossoming is the opposite of said wilting. The power of the cell is slowly increased from zero to the desired final power of the cell. Hence the cell may gradually increase its useful size, like a blossoming flower. The advantage of the methods is that the change is fairly slow, allowing user equipment units 120, network nodes 110 and core network time to detect the change and time to act such as e.g. perform handover, in due time. Another advantage is that the system is not flooded with several user equipment units demanding handover at the same time.

If there is a new "omnicell" carrier in the cell, it is likely to be the receiver of most of the handovers. If there is no other carrier in the sector, the user equipment 120 will handover to neighbour sectors, if they are in the overlap area or cells belonging to other network node, which may comprise other network nodes on the same site, for example if there is one WCDMA and one GSM.

A new carrier may be created, unless not done already. This action of creating the new carrier may be performed if the carrier was not created earlier i.e. for embodiments without any carrier in the sector to handover to.

It may according to some embodiments be unfeasible to have two carriers active simultaneously, i.e. the old carrier may be removed before the new one may be created according to some embodiments.

After all sectors have been looped; the carriers in all sectors may transmit the same signal. Hence all sectors may be modulated by any of the radio modules 112-1, 112-2, 112-3 since they transmit the same signal. The reason for using all the radio modules 112-1, 112-2, 112-3 now may be for output power. Even if the signal is the same, each radio module 112-1, 112-2, 112-3 may just provide about 1/3 of the power (for a 3 sector site), while - if it was just one radio module 112-1, 112-2, 112-3 (operating in omni cell mode) it would have to supply about 3 times the power to feed all three sectors by itself.

All radio modules 112-1, 112-2, 112-3 except the one (or a few) needed for powering the omni-cell may be shut down now. Hence it is possible to switch from multi-sector downlink to omnicell. During the switch, the output power of the omnicell radio modules 112-1, 112-2, 112-3 has to be changed i.e. increased, from enough to feed just one sector to enough to feed all sectors i.e. multiply the output power, in Watts, with the number of sectors. This may also assume that the power demand is sufficiently low to allow for said power increase; which may be one precaution for the decision to start the change from multi-cell to omni-cell according to some embodiments.

Radio modules 112-1, 112-2, 112-3 which are not needed may be powered off completely, saving a lot of energy since the transmitter of the radio modules 112-1, 112-2, 112-3 is the major power consumer in a typical network node 110.

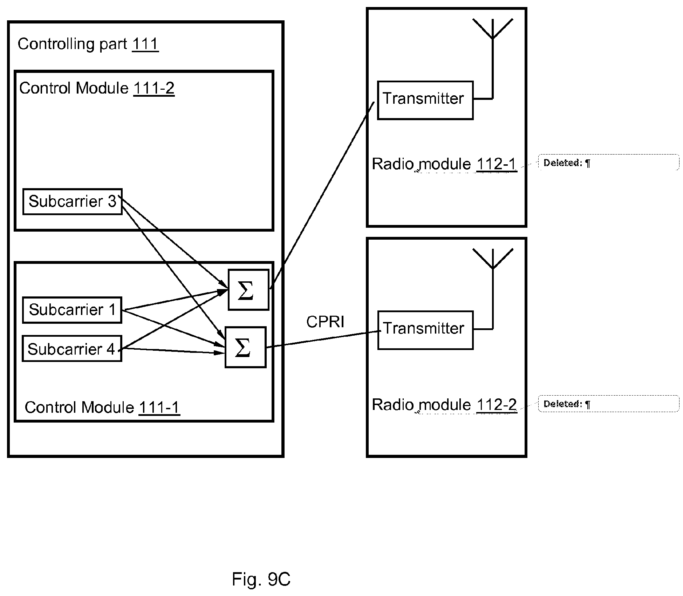

The above described flow for moving from multisector mode into omni-sector mode according to some embodiments may be reversed. In such case the starting state is that the network node 110 is configured in omni-cell mode. Firstly, all radio modules 112-1, 112-2, 112-3 may be powered on. The radio modules 112-1, 112-2, 112-3 that have previously been powered off may now be powered and hence possible to start using again. All radio modules 112-1, 112-2, 112-3 may be modulated with an exact copy of the omni-cell carrier, according to some embodiments, see the scenario depicted in **Figure 9C**.

This may be done by feeding the CPRI downlink I/Q stream to all radio modules for some embodiments, while in other embodiments a summation point similar to the one used in the sequences illustrated in Figure 8A, may be utilised for seamless move of carrier downlink from one radio module 112-1 to another radio module 112-2. by creating a new summation point feeding an I/Q stream to the radio module 112-2. The new summation point for the new carrier may be created in the same control module 111-1 or 111-2 as the old summation point, or may be created in a different control module 111-1 or 111-2 as the old summation point. What is important is that the new summation point is connected to the other radio module 112-2 while the old summation point is connected to radio module 112-1. The second summation point may modulate the carrier with an effectively exact copy of the I/Q stream as the I/Q stream from the first summation point.

All radio modules 112-1, 112-2, 112-3 may thereby be active, but still sending the same signal. During the switch, the radio modules 112-1, 112-2, 112-3 feeding the omni-cell may change, i.e. reduce its power from enough to feed all sectors down to enough for just one sector antenna i.e. divide the output power, in Watts, with number of sectors.

Each antenna may at this moment be powered by its own respective radio module 112-1, 112-2, 112-3. But they still send the same omni-cell carrier, which needs to be converted into independent carriers in each sector. Other embodiments may employ other means of moving user equipment 120.

Optionally, the network node 110 may wilt the omni-cell carrier. Wilt here is only used if the embodiment relies upon other sectors and neighbour cells to take over traffic. This step may be skipped if the omni-cell carrier is reused in this sector. The user equipment 120 using the omni-cell carrier may find slowly degrading performance/metrics. If the omnicell remain in an overlapping neighbour sector, it may have sufficient strength to maintain the connection without handover. Otherwise, user equipment 120 will handover to neighbour sectors, if they are in the overlap area, or cells belonging to other network nodes, which may comprise other network nodes situated on the same site, for example if there is one WCDMA and one GSM situated on the same geographical site.

A new independent carrier may according to some embodiments be created in the sector. This may however be skipped if the omni-cell carrier is reused in this sector. Further, the network node 110 may wilt the omni-cell carrier in the sector. However, this action may be skipped if the omni-cell carrier is reused in this sector according to some embodiments. Thus this action may only be performed if the omni-cell carrier was not wilted in a previous step. Due to the conditions above, this action may only be performed when there is a new sector carrier in the sector. Hence the wilt may result in handover to that carrier.

Thereby, all radio modules 112-1, 112-2, 112-3 comprised within the network node 110 may be operating in all sectors, transmitting on high power and in high capacity mode.

Further there may be omni-multi toggling embodiment variants. A new carrier on same frequency may be created at the same antenna. This might have interference issues for WCDMA, with two cell carriers from the same antenna only separated by their coding, but the possibility may not be ruled out since it is a straightforward solution.

Also, according to some embodiments, a new carrier on different frequency at same antenna may be created as previously discussed, but separated by frequency and no code interference issues.

Furthermore, a new carrier may be created on a different antenna, according to some embodiments. As previously discussed, the carriers may also be separated in space by using separate antennas. This may be a feasible solution if there is Transmit (TX) diversity or Multiple Input Multiple Output (MIMO) i.e. where there are two, or more, antennas in the sector that may be modulated by independent carriers in downlink, which may be the case for MIMO and TX diversity.

In further addition, wilting old carrier then blossom new carrier may be made according to some embodiments. Some embodiments may rely upon overlapping cells from the same and/or neighbour network node 110 to take over the radio traffic.

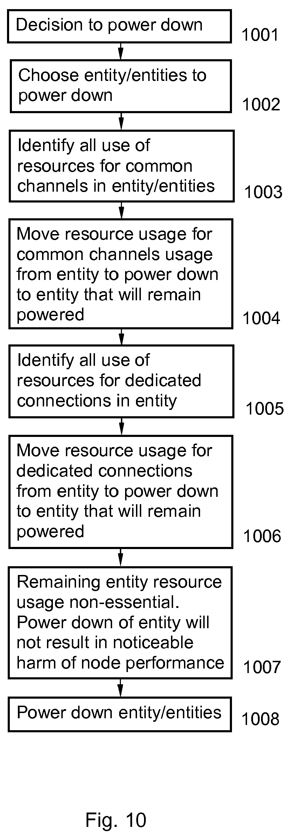

**Figure 10** is illustrating some possible actions to be performed for a generic entity power down sequence. The generic sequence on how to power down an entity may be made on a network node 110, such as a base station. The illustrated example of a sequence of actions 1001-1008 may then employ different embodiments for the actual resource allocation and de-allocation. Hence the impact on the Key Performance Index (KPI) of the network node 110, negligible or none, may depend on the choice of embodiment.

The radio network performance may be measured by the Key Performance Index, which is a set of statistics describing things like e.g. how long the network node 110 has been unavailable for a noticeable period during the measured period. The phrasing "noticeable period" may be an advantage, according to some embodiments, since some embodiments use the fact that a short interrupt in service may be acceptable. Also, percentage of the processed calls that may have been terminated due to problems such as e.g. the subscriber got the call interrupted.

The Key Performance Index may be of some advantage for a network operator according to some embodiments, since it may indicate the perceived reliability and performance of the network from the subscriber's point of view. Also, it may indicate that revenue is lost if the network is down or performs bad. Hence it may be an advantage that any change in radio base station mode of operation may be performed with as little effect on KPI as possible, preferably negligible or none.

Some typical ways to achieve this may be infrequent changes i.e. have long times of good performance to compensate for the downtime, to plan the downtime to periods with small or no impact on the KPI, overlapping service, i.e. have another network node or part of the network node 110 to take over during the downtime. This may be used by some embodiments disclosed herein. Also, a very short downtime may be accepted. If the time is short enough, the downtime may not be noticed at all or just be noticed as an acceptable delay. Further, small numbers may be compensated with big numbers. It may be acceptable to drop a few calls, as long as it may be a very small number compared to all successfully processed calls, according to some embodiments. Further, by waiting a period that may be long enough for most calls to end due to subscriber hanging up or handover by the network 100.

It may be noted that not all actions 1001-1008 may be performed within all embodiments of the method, and that the order of performance in time may be different from the order of enumeration. Further, some of the actions may be performed simultaneously, according to some embodiments.

### Action 1001

The flow of actions may start with a decision to power down one or several parts (entities) of the network node 110, such as e.g. base station. The decision may either be taken by a human operator who orders the power down through a user interface to the network node 110 to the Resource Controller or other control part 111 of the network node 110, by the network node 110 itself according to predefined rules or by another node in the network 100, like a central node in the control centre.

Such decision may have different reasons, such as for example energy saving. The network node 110 is expected to not need all entities and may save energy by powering down parts until full capacity/performance for the network node 110 may be needed. Another reason may be battery saving. It may be desirable to extend operation time on battery. A further reason may be reparation, or upgrading of any unit, such as a control module 111-1, 111-2 or a radio module 112-1, 112-2, 112-3 comprised within the network node 110. A unit with a partial fault carries traffic on remaining non-faulty entities, but may now be about to be replaced with a fully working part. According to some embodiments may sometimes control units 111-1, 111-2 be reconfigured or removed. Sometimes network node cables may be rewired in order to change a configuration. By powering down, or deactivating, the termination of a TN cable, IC cable or CPRI cable according to the invention it can be removed without traffic impact.

Another factor that may influence the decision may be that the total load is low enough to be handled without some of the hardware resources of the network node 110. Hence the resources are redundant for the moment and possible to power down if they just can be cleared from use. In a preferred embodiment, power down may be initiated when the resource handler has had free resources equal to more than an operating Power Down Entity. Another embodiment may base the decision upon time of day and/or day of week that is known to have low traffic load; radio traffic may typically be lower during nights, for example.

### Action 1002

The entity/entities to power down, such as a control module 111-1, 111-2 or a radio module 112-1, 112-2, 112-3 comprised within the network node 110 may then be selected. Thus it is decided which entities to power down; i.e. which entity/entities 111-1, 111-2, 112-1, 112-2, 112-3 may be powered down without significantly reducing the coverage and/or capacity that is expected to be required during the power down period.

### Action 1003

All usage for the common channels may then be identified. Thus the control program of the network node 110 may identify all cells common channels that use any of the resources 111-1, 111-2, 112-1, 112-2, 112-3 to be powered down, according to some embodiments. This may be performed by querying the resource handler(s) of the network node 110, responsible for the resources 111-1, 111-2, 112-1, 112-2, 112-3 for the processes using the resource(s) 111-1, 111-2, 112-1, 112-2, 112-3 or querying the processes for affected common channels/cells.

### Action 1004

The resource usage for common channels may then be moved. This action may comprise several embodiments, but the general action is to move the usage of resources 111-1, 111-2, 112-1, 112-2, 112-3 for common channels with a short, or even shortest possible, downtime. It may be an advantage to not have any downtime at all, according to some embodiments. Usage may thus be moved from resources 111-1, 111-2, 112-1, 112-2, 112-3 that will be powered down to resources 111-1, 111-2, 112-1, 112-2, 112-3 that are not to be powered down.

### Action 1005

Further, the usage for the dedicated channels may then be identified. The control program of the network node 110 may identify all calls/connections that are using the resource 111-1, 111-2, 112-1, 112-2, 112-3. This may be performed by querying the resource handler(s) of the network node 110, responsible for the resources 111-1, 111-2, 112-1, 112-2, 112-3 for the processes using the resource(s) 111-1, 111-2, 112-1, 112-2, 112-3, or querying the processes for affected calls/connections/cells.

### Action 1006

Having done that, the resource usage may be moved from the resource(s) 111-1, 111-2, 112-1, 112-2, 112-3 to be powered down, to other resource(s) 111-1, 111-2, 112-1, 112-2, 112-3, which are not to be powered down. This action may comprise several embodiments, but the general action may comprise stop using the resources 111-1, 111-2, 112-1, 112-2, 112-3 that will be powered down and (more or less, depending on method) increase usage of resources 111-1, 111-2, 112-1, 112-2, 112-3 that are not to be powered down, according to some embodiments.

### Action 1007

At this point, the resources 111-1, 111-2, 112-1, 112-2, 112-3 to be powered down are not used for anything considered important since all usage of them has been moved. They may thereby be safe to power down, as remaining possible usage of them may be considered as non-essential, according to some embodiments.

### Action 1008

This action comprises the actual power down. The power down may be made literally, by shutting down the power feed, but the typical embodiment may comprise shutting down some power feeds but keep some standby power. For some cases, it may be sufficient to stop or reduce the speed of clocks, according to some embodiments. In yet some cases, for example cable interfaces, there may not be a complete power down, i.e. no literal power down at all but rather that the amount of transferred data or speed is significantly reduced, or even no data may be transmitted or received by the resource 111-1, 111-2, according to some embodiments.

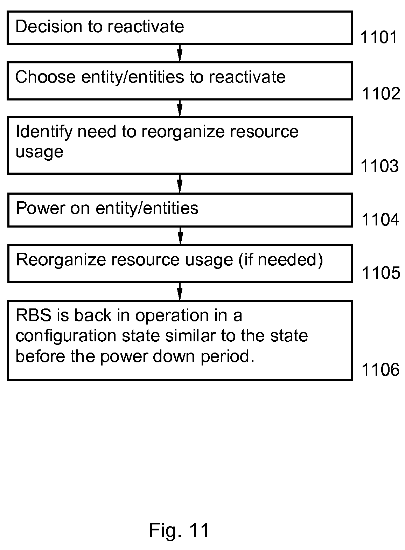

**Figure 11** is illustrating some possible actions to be performed for a generic entity reactivation sequence of actions. The generic sequence on how to reactivate an entity may be made on a network node 110, such as a base station. The illustrated example of a sequence of actions 1101-1106 may then employ different embodiments for the actual resource allocation and de-allocation. Hence the impact on RBS KPIs of the network node 110, negligible or none, may depend on the choice of embodiment. It may be noted that not all actions 1101-1106 may be performed within all embodiments of the method, and that the order of performance in time may be different from the order of enumeration. Further, some of the actions 1101-1106 may be performed simultaneously, according to some embodiments, in order to reactivate entities that have been powered down with small or no impact on the traffic of the network node 110.

### Action 1101

A decision is taken to reactivate the entity that has been down powered.

This decision may be related to the power down reason, which generally indicates when it is time to power on again. Such reasons may comprise e.g. energy saving. The powered down parts 111-1, 111-2, 112-1, 112-2, 112-3 of the network node 110 are likely to be needed soon; for example because of high and increasing traffic load or because the low traffic time/day has ended. Alternatively, such reason may comprise battery saving. When the main power source has returned, there may be no need to save on battery. Further, in case the module 111-1, 111-2, 112-1, 112-2, 112-3 was down powered due to reparation, upgrade, reconfiguring or removing of the unit, the decision to power on again may be taken when the reparation, upgrade, reconfiguration or replacement is done.

### Action 1102

In a subsequent action, the entity/entities 111-1, 111-2, 112-1, 112-2, 112-3 to reactivate may be selected. Thus it may be decided which entity/entities 111-1, 111-2, 112-1, 112-2, 112-3 are suitable to power up again, based on i.e. the need to provide increased coverage and/or capacity that may be expected to be demanded during a period to come.

### Action 1103

According to some embodiments, the resource usage may be reorganized. There may for example be an advantage to move cells or calls in order to fully utilize the restored entities 111-1, 111-2, 112-1, 112-2, 112-3. One example may be a network node 110 comprising two control modules 111-1, 111-2 and three radio modules 112-1, 112-2, 112-3, where each radio module operate two carriers giving a total of six cells where radio modules 112-1, 112-2, 112-3 have been operated on one control module 111-1 while the other control module 111-2 has been powered off; when the second control module 111-2 is powered on again, it may take control of the second carrier in the three radio modules 112-1, 112-2, 112-3 again, and the three cells on the second carrier in those three radio modules 112-1, 112-2, 112-3 may be be moved to use resources in the second control module 111-2 again in order to improve the capacity.

### Action 1104

Then the entity/entities 111-1, 111-2, 112-1, 112-2, 112-3 may be powered on. The power down controller of the network node 110 and, when needed, control program(s) may thus restore the power. The appropriate control programs and hardware resources 111-1, 111-2, 112-1, 112-2, 112-3 may start up and become ready to be used and hence possible to add to the resource handler.

### Action 1105

Further, the resource usage may be reorganized, according to some embodiments. This action may be embodied in several somewhat different embodiments, but the general concept may comprise to deactivate and reactive or move cells and/or calls, if required, to the entities 111-1, 111-2, 112-1, 112-2, 112-3 that has been powered up.

The involved steps are similar to the ones already discussed for power down, except that no resources are marked as unavailable, the connections/cells to move has been identified, and everything that is possible to reactivate is reactivated, preferably using resources in the reactivated entity.

### Action 1106

The network node 110 is back in operation. The configuration state, i.e. cells/calls usage of resources 111-1, 111-2, 112-1, 112-2, 112-3 may now be equal to the state before power down; or to be more exact, according to the intended configuration, since the number of powered on entities 111-1, 111-2, 112-1, 112-2, 112-3 and involved entities 111-1, 111-2, 112-1, 112-2, 112-3 may have been planned to differ from the original state as a result of the procedure.

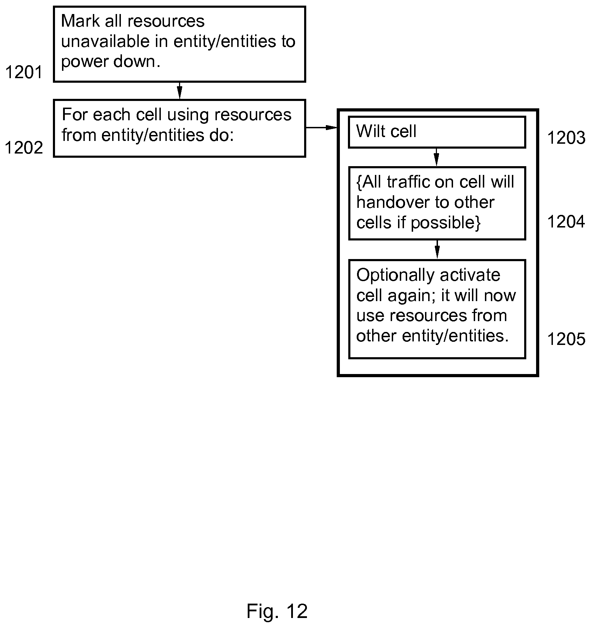

**Figure 12** is a flow chart which illustrates an embodiment wherein cell wilt is utilized. The illustrated embodiment is combining simplicity with small traffic impact. Further, the illustrated embodiment relies upon that most cells are overlapping/ intersecting with other cells from the same network node 110 and/or other network nodes, both in the same access technology and in related access technologies, such as e.g. most user equipments 120 configured for WCDMA are also configured for GSM. Hence, in various, and perhaps even in most real life situations, the user equipment 120 has an alternative cell to perform a seamless hand over to if the radio connection to the cell in use becomes poor, or is wilted down.

It may be noted that not all actions 1201-1205 may be performed within all embodiments of the method, and that the order of performance, in time, may be different from the order of enumeration. Further, some of the actions 1201-1205 may be performed simultaneously, according to some embodiments, in order to power down a cell using cell wilt, with small or no impact on the traffic of the network node 110.

### Action 1201

The Resource Control may request the resource handler(s) to mark all resources in the entity to power down as unavailable. Resources in use may still be used, i.e. continue to be used, but new requests for resources will only return resources in other entities that are not about to be powered down, or be denied if no resources are available in the other entities.

### Action 1202

This operation is preferably performed one cell at a time. Hence some user equipment 120 may hand over to other cells in the same network node 110.

### Action 1203

Having done that, the cell may be wilted resulting in all user equipment 120 handing over to other cells. Possibly, they may experience a dropped call in the rare situation that no other cell is available to the user equipment 120.

### Action 1204

When the cell has been wilted, no user equipment 120 is using the cell for traffic and no user equipment 120 is receiving network information from it since there is no output power. The cell is effectively gone in a user equipment perspective since it is not transmitting. Now it may be possible to release all resources used for the cell without interfering with traffic.

### Action 1205

Thereafter, it becomes possible to activate the cell again, requesting resources from the resource handler that may be picked from entities which may not be powered down. This change of resources may also comprise that a cell is using another set of cables after the reactivation i.e. is controlled by another module 111-1, 111-2.

This action is not performed within some alternative embodiments, since some power down scenarios involves shutting down cells that are not needed during the power down period.

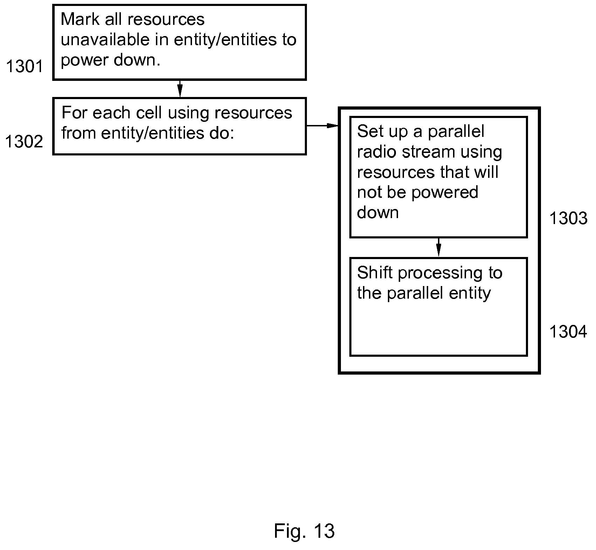

**Figure 13** is a flow chart which illustrates an embodiment for moving calls.

It may be noted that not all actions 1301-1304 may be performed within all embodiments of the method, and that the order of performance, in time, may be different from the order of enumeration. Further, some of the actions 1301-1304 may be performed simultaneously, according to some embodiments, in order to move the calls, with small or no impact on the traffic of the network node 110.

### Action 1301

The Resource Control may request the resource handler(s) to mark all resources in the entity to power down as unavailable. Resources in use may still be used, i.e. continue to be used, but new requests for resources will only return resources in other entities that are not about to be powered down, or be denied if no resources are available in the other entities.

### Action 1302

This action may be performed for each call using resources from an entity that is about to be powered down. Since a call may comprise a plurality of radio streams toward the user equipment 120, the operation may optionally move just the radio streams using resources that will be powered down.

### Action 1303

A new reception and transmission stream with equivalent settings as the one to be moved may be set up using resources in entities not to be powered down. The new parallel stream handlers may use the same input as the existing ones, but may discard its output.

### Action 1304

At a certain point of time, the reception and transmission streams output may be shifted to use the newly created streams. After this, the streams using entities to be powered down may become redundant, not performing anything useful and may be removed without affecting the call.

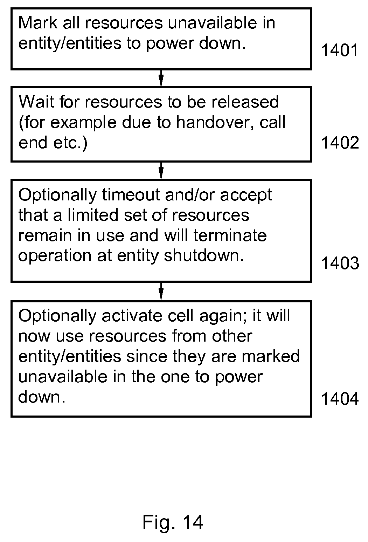

**Figure 14** is a flow chart which illustrates an embodiment using timeout. This embodiment may be easily implemented, however, calls may be dropped for some users.

It may be noted that not all actions 1401-1404 may be performed within all embodiments of the method, and that the order of performance, in time, may be different from the order of enumeration. Further, some of the actions 1401-1404 may be performed simultaneously, according to some embodiments, in order to timeout calls which are still connected to the same cell during the time out period, e.g. does neither hang up nor move to another cell during the period.

### Action 1401

The Resource Control may request the resource handler(s) to mark all resources in the entity to power down as unavailable. Resources in use may still be used, i.e. continue to be used, but new requests for resources will only return resources in other entities that are not about to be powered down, or be denied if no resources are available in the other entities.

### Action 1402

Wait for resources to be released, for a predetermined or configurable period of time. Most calls are ended within a minute or a few minutes due to subscriber hanging up or moving to another cell. Hence the majority of the resource usage is likely to disappear if waiting long enough.

### Action 1403

Some connections, like long phone calls, or a user watching a movie etc. may take a very long time. If the user equipment 120 does not move during the period, it is likely to remain connected to the same cell and using the same network resources. Hence an embodiment may comprise an upper time limit, after which any remaining connections may be cut in order to reach power down within a reasonable time.

### Action 1404

Thereafter, it becomes possible to activate the cell again, requesting resources from the resource handler that may be picked from entities which may not be powered down. This change of resources may also comprise that a cell is using another set of cables after the reactivation i.e. is controlled by another module 111-1, 111-2.

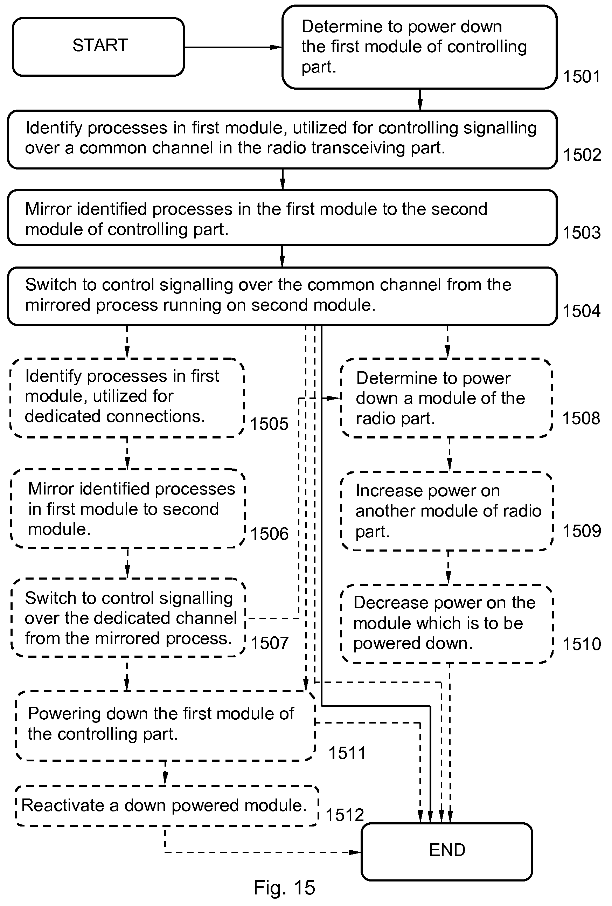

**Figure 15** is a flow chart illustrating embodiments of a method in a network node 110. The method aims at preparing powering down of a first module 111-1 of a controlling part 111 comprised in the network node 110. The network node 110 also comprises a radio transceiving part 112, and wherein the controlling part 111 is configured to run processes for controlling radio transmission over the radio transceiving part 112. The controlling part 111 further comprises a second module 111-2. The first module 111-1 and the second module 111-2 may be of the same, similar or corresponding categories, comprising e.g. separate digital units, cables, driver circuits, one or more parts of one or more circuit boards, one or more chips, central processing units, memories and/or processing circuits according to different embodiments. The controlling part 111 may according to some embodiments comprise a plurality of modules 111-1, 111-2, situated on the same physical unit. Further, the radio transceiving part 112 may comprise a plurality of modules 112-1, 112-2, 112-3, according to some embodiments.

To appropriately prepare powering down of the first module 111-1 of the controlling part 111, embodiments of the method may comprise a number of actions 1501-1512.

It is however to be noted that some of the described actions, e.g. action 1501-1512 may be performed in a somewhat different chronological order than the enumeration indicates. Also, it is to be noted that some of the actions such as e.g. 1505-1512 may be performed within some alternative embodiments. Further, any, some or all actions, such as e.g. 1501, 1502 and/ or 1503 may be performed simultaneously or in a rearranged chronological order. Embodiments of the method may comprise the following actions:

### Action 1501

It is determined to power down the first module 111-1 of the controlling part 111.

According to some embodiments, the power down of the first module 111-1 of the controlling part 111 may comprise alternating the order in which the modules 111-1, 111-2, 112-1, 112-2, 112-3 are to be activated, or deactivated.

The decision to power down the first module 111-1 of the controlling part 111, may be based on any of: the traffic load within a cell served by the network node 110, the time of the day, the day of the week, the period of the year, collected usage statistics, error message received from the malfunctioning module 111-1, indication of ongoing upgrading or reconfiguration of the module 111-1, according to different embodiments.

### Action 1502

A process in the first module 111-1 that is utilized for controlling, or processing data related to radio transmission over a common channel in the radio transceiving part 112 is identified. Some embodiments may further identify the cell or radio stream that said process is related to in order to wilt said cell or stream.

### Action 1503

The identified process in the first module 111-1 is mirrored over to the second module 111-2 of the controlling part 111.

Some embodiments may perform said mirroring by starting or activating a process in the second module 111-2 with similar relation to the common channel as said identified process in first module 111-1. This may be seen as a restart of the common channel, with a very short downtime.

Wilt may be used in some embodiments as a controlled way to take down the cell during said restart. Said wilt may according to some embodiments be a part of Action 1510, which subsequently will be further described in more detail.

### Action 1504

A switch is made, to control the radio transmission over the common channel in the radio transceiving part 112 from the mirrored 1503 process running on the second module 111-2.

Blossoming may be used in some embodiments as a controlled way to bring up the cell again after said restart. Said blossoming may according to some embodiments be a part of Action 1509, which subsequently will be further described in more detail.

### Action 1505

This action may be comprised within some alternative embodiments, but not necessarily within all imaginable embodiments of the method.

A process may be identified in the first module 111-1 that is utilized for controlling, or processing data related to radio transmission over a dedicated connection over a dedicated channel in the radio transceiving part 112.

### Action 1506

This action may be comprised within some alternative embodiments, but not necessarily within all imaginable embodiments of the method.

The identified 1505 process in the first module 111-1 may be mirrored over to the second module 111-2 of the controlling part 111.

### Action 1507

This action may be comprised within some alternative embodiments, but not necessarily within all imaginable embodiments of the method.

A switch may be made, to control the radio transmission over the dedicated channel in the radio transceiving part 112 from the mirrored 1506 process running on the second module 111-2.

### Action 1508

This action may be comprised within some alternative embodiments, but not necessarily within all imaginable embodiments of the method.

It may be determined to power down at least one module 112-1, 112-2 of the radio transceiving part 112.

According to some embodiments, the power down of the at least one module 112-1, 112-2 of the radio transceiving part 112, may comprise alternating the order in which the modules 111-1, 111-2, 112-1, 112-2, 112-3 are to be activated, or deactivated.

Further, a new carrier may be activated, according to some embodiments within each module 112-1, 112-2 of the radio transceiving part 112, which is to be powered down.

### Action 1509

This action may be comprised within some alternative embodiments, but not necessarily within all imaginable embodiments of the method.

The transmission power may be increased on a module 112-3 of the radio transceiving part 112, which is not to be powered down, according to some embodiments.

### Action 1510

This action may be comprised within some alternative embodiments, but not necessarily within all imaginable embodiments of the method.

The transmission power on the module 112-1, 112-2, which is to be powered down, is decreased until the transmission power is effectively reduced to zero.

### Action 1511

This action may be comprised within some alternative embodiments, but not necessarily within all imaginable embodiments of the method.

The first module 111-1 of the controlling part 111 may be powered down.

### Action 1512

This action may be comprised within some alternative embodiments, but not necessarily within all imaginable embodiments of the method.

A down powered module 111-1, 112-1, 112-2 may be reactivated.

The reactivation may comprise reorganising the distribution of processes to be running for controlling the radio transmission over the radio transceiving part 112 between the first module 111-1, to be reactivated and the second module 111-2, which is active within the controlling part 111.

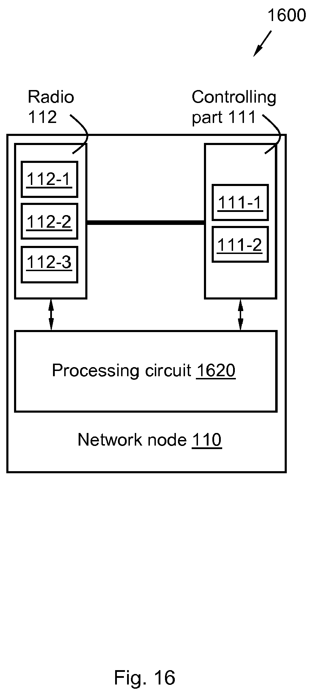

**Figure 16** is a block diagram illustrating an arrangement 1600 in a network node 110. The arrangement 1600 is configured to perform any, some or all of the actions 1501-1512 for preparing powering down of a first module 111-1 of a controlling part 111 comprised in the network node 110. The network node 110 also comprises a radio transceiving part 112. The controlling part 111 is configured to run processes for controlling radio transmission over the radio transceiving part 112, which controlling part 111 further comprises a second module 111-2.

The first module 111-1 and the second module 111-2 may be of the same, similar or corresponding categories, comprising e.g. separate digital units, cables, driver circuits, one or more parts of one or more circuit boards, one or more chips, central processing units, memories and/or processing circuits according to different embodiments. The controlling part 111 may according to some embodiments comprise a plurality of modules 111-1, 111-2, situated on the same physical unit. Further, the radio transceiving part 112 may comprise a plurality of modules 112-1, 112-2, 112-3, according to some embodiments.

For the sake of clarity, any internal electronics or other components of the network node 110, not completely indispensable for understanding the present method has been omitted from Figure 16.

In order to perform the actions 1501-1512 correctly, the arrangement 1600 comprises a processing circuit 1620, configured to determine to power down the first module 111-1 of the controlling part 111. Further, the processing circuit 1620 is also being configured to identify a process in the first module 111-1 that is utilized for controlling radio transmission over a common channel in the radio transceiving part 112. The processing circuit 1620 being further configured to mirror the identified process in the first module 111-1 over to the second module 111-2 of the controlling part 111. The processing circuit 1620 is additionally configured to switch over to control the radio transmission over the common channel in the radio transceiving part 112 from the mirrored process running on the second module 111-2.

The processing circuit 1620 may further, according to some embodiments, be configured to identify a process in the first module 111-1 that is utilized for controlling radio transmission over a dedicated channel in the radio transceiving part 112. In addition, according to some embodiments, the processing circuit 1620 may also be configured to mirror the identified process in the first module 111-1 over to the second module 111-2 of the controlling part 111. In further addition, the processing circuit 1620 may further be configured to switch over to control the radio transmission over the dedicated channel in the radio transceiving part 112 from the mirrored process running on the second module 111-2.

The radio transceiving part 112 may further comprise a plurality of modules 112-1, 112-2, 112-3, according to some embodiments.

The processing circuit 1620 may further be configured to determine to power down at least one module 112-1, 112-2 of the radio transceiving part 112, according to some embodiments. Further, the processing circuit 1620 may also be configured to increase the transmission power on a module 112-3 of the radio transceiving part 112, which is not to be powered down. The processing circuit 1620 may additionally be configured to decrease the transmission power on the module 112-1, 112-2, which is to be powered down, until the transmission power is effectively reduced to zero.

The processing circuit 1620 may further be configured to power down the first module 111-1 of the controlling part 111, according to some embodiments.

The processing circuit 1620 may comprise e.g. one or more instances of a Central Processing Unit (CPU), a processing unit, a processor, a microprocessor, or other processing logic that may interpret and execute instructions. The processing circuit 1620 may further perform data processing functions for inputting, outputting, and processing of data comprising data buffering and device control functions, such as call processing control, user interface control, or the like.

The processing circuit 1620 may comprise a combination of digital signal processors and dedicated signal processing chips used to modulate calls/data traffic into one or more digital carrier(s) to be forwarded to a transceiver and for receiving digital data from a receiver and detect/demodulate it into received calls/traffic, according to some embodiments, for providing baseband processing.

According to some embodiments, the arrangement 1600 may comprise at least one memory. The memory may comprise a physical device utilized to store data or programs i.e. sequences of instructions, on a temporary or permanent basis. According to some embodiments, the memory may comprise integrated circuits comprising silicon-based transistors. Further, the memory may be volatile or non-volatile.

Further, it is to be noted that some of the described units 111-1620 comprised within the arrangement 1600 in the network node 110 are to be regarded as separate logical entities but not with necessity separate physical entities.

To mention just one example, the first module 111-1 and the second module 111-2 of the controlling part 111 may according to some embodiments be comprised within the same physical unit, such as a board. However, according to other embodiments, the first module 111-1 and the second module 111-2 of the controlling part 111 may be separate, distinct units which are situated at a distance from each other.

As another example according to some embodiments may regard the processing circuit 1620 as a logical entity within the logical entity 111, that comprises the physical devices 111-1, 111-2.

The radio transceiving modules 112-1, 112-2, 112-3 comprised in the radio transceiving part 112 may in turn comprise a receiver and a transmitter i.e. a transmitter circuit and a receiver circuit, which are configured to transmit outgoing radio frequency signals and receive incoming radio frequency signals, respectively, via an antenna. The radio frequency signals transmitted between the network node 110 and any user equipment 120 within range.

The actions 1501-1512 to be performed in the network node 110 may be implemented through one or more processing circuits 1620 in the network node 110, together with computer program code for performing the functions of the present actions 1501-1512. Thus a computer program product, comprising instructions for performing the actions 1501-1512 in the network node 110 may prepare powering down of a first module 111-1 of a controlling part 111 comprised in the network node 110, when being loaded into the one or more processing circuits 1620.

The computer program product mentioned above may be provided for instance in the form of a data carrier carrying computer program code for performing at least some of the actions 1501-1512 according to some embodiments when being loaded into the processing circuit 1620. The data carrier may be e.g. a hard disk, a CD ROM disc, a memory stick, an optical storage device, a magnetic storage device or any other appropriate medium such as a disk or tape that may hold machine readable data in a non transitory manner. The computer program product may furthermore be provided as computer program code on a server and downloaded to or fetched by the network node 110 remotely, e.g. over an Internet or an intranet connection.

When using the formulation "comprise" or "comprising" within the present context, it is to be interpreted as non- limiting, i.e. meaning "consist at least of". The present methods and devices are not limited to the above described preferred embodiments. Various alternatives, modifications and equivalents may be used. Therefore, the above embodiments are not to be taken as limiting the scope of claimed protection, which instead is to be defined by the appending claims.

## Claims

1. A method in a network node (110) for preparing powering down of a first module (111-1) of a controlling part (111) comprised in the network node (110), wherein the network node (110) also comprises a radio transceiving part (112), and wherein the controlling part (111) is configured to run processes for controlling radio transmission over the radio transceiving part (112), which controlling part (111) further comprises a second module (111-2), the method **characterised by**:
*determining* (1501) to power down the first module (111-1) of the controlling part (111),
*identifying* (1502) a process in the first module (111-1) that is utilized for controlling radio transmission over a common channel in the radio transceiving part (112),
*mirroring* (1503) the identified (1502) process in the first module (111-1) over to the second module (111-2) of the controlling part (111),
*switching* (1504) to control the radio transmission over the common channel in the radio transceiving part (112) from the mirrored (1503) process running on the second module (111-2).

2. The method according to claim 1, wherein mirroring (1503) the identified (1502) process in the first module (111-1) over to the second module (111-2) of the controlling part (111), and switching (1504) to control the radio transmission over the common channel in the radio transceiving part (112) from the mirrored (1503) process running on the second module (111-2) comprises wilting one or more carrier for a common channel.

3. The method according to any of claim 1 or claim 2, further comprising:
*identifying* (1505) a process in the first module (111-1) that is utilized for controlling radio transmission over a dedicated connection over a dedicated channel in the radio transceiving part (112),
*mirroring* (1506) the identified (1505) process in the first module (111-1) over to the second module (111-2) of the controlling part (111),
*switching* (1507) to control the radio transmission over the dedicated channel in the radio transceiving part (112) from the mirrored (1506) process running on the second module (111-2).

4. The method according to any of claims 1-3, wherein a cell is wilted in order to move a dedicated connection using the first module (111-1) of the controlling part (111) to either the second module (111-2) of the controlling part (111), or to another network node (110).

5. The method according to any of claims 1-4, wherein the radio transceiving part (112) comprises a plurality of modules (112-1, 112-2, 112-3), and wherein the method further comprises:
*determining* (1508) to power down at least one module (112-1, 112-2) of the radio transceiving part (112),
*increasing* (1509) the transmission power on a module (112-3) of the radio transceiving part (112), which is not to be powered down,
*decreasing* (1510) the transmission power on the module (112-1, 112-2), which is to be powered down, until the transmission power is reduced to zero.

6. The method according to claim 5, wherein a new carrier is activated within each module (112-1, 112-2) of the radio transceiving part (112), which is to be powered down.

7. The method according to any of claims 1-6, further comprising *powering down* (1511) the first module (111-1) of the controlling part (111).

8. The method according to any of claims 1-7, further comprising *reactivating* (1512) a down powered module (111-1, 112-1, 112-2).

9. The method according to claim 8, wherein the reactivation (1512) comprises reorganizing the distribution of processes to be running for controlling the radio transmission over the radio transceiving part (112) between the first module (111-1), to be reactivated and the second module (111-2), which is active within the controlling part (111).

10. The method according to any of claims 1-9, wherein determining (1501) to power down the first module (111-1) of the controlling part (111), or determining (1508) to power down at least one module (112-1, 112-2) of the radio transceiving part (112), further comprises alternating the order in which the modules (111-1, 111-2, 112-1, 112-2, 112-3) are to be activated, or deactivated.

11. The method according to any of claims 1-10, wherein the first module (111-1) and the second module (111-2) of the controlling part (111) comprises any of:
separate digital units, cables, driver circuits, one or more parts of one or more circuit boards, one or more chips, one or more parts of one or more chips, central processing units, memories and/or processing circuits.

12. The method according to any of claims 1-11, wherein the controlling part (111) comprises a plurality of modules (111-1, 111-2), situated on the same physical unit.

13. The method according to any of claims 1-12, wherein the decision (1501) to power down the first module (111-1) of the controlling part (111), is made based on any of:
the traffic load within a cell served by the network node (110), the time of the day, the day of the week, the period of the year, collected usage statistics, error message received from a malfunctioning module (111-1), indication of ongoing upgrading or reconfiguration of the module (111-1).

14. An arrangement (1600) in a network node (110) for preparing powering down of a first module (111-1) of a controlling part (111) comprised in the network node (110), wherein the network node (110) also comprises a radio transceiving part (112), and wherein the controlling part (111) is configured to run processes for controlling radio transmission over the radio transceiving part (112), which controlling part (111) further comprises a second module (111-2), the arrangement (1600) **characterised by**:
a processing circuit (1620), configured to determine to power down the first module (111-1) of the controlling part (111), the processing circuit (1620) also being configured to identify a process in the first module (111-1) that is utilized for controlling radio transmission over a common channel in the radio transceiving part (112), the processing circuit (1620) being further configured to mirror the identified process in the first module (111-1) over to the second module (111-2) of the controlling part (111), the processing circuit (1620) additionally being configured to switch to control the radio transmission over the common channel in the radio transceiving part (112) from the mirrored process running on the second module (111-2).

15. The arrangement (1600) according to claim 14, wherein
the processing circuit (1620) is further configured to identify a process in the first module (111-1) that is utilized for controlling radio transmission over a dedicated channel in the radio transceiving part (112), the processing circuit (1620) also being configured to mirror the identified process in the first module (111-1) over to the second module (111-2) of the controlling part (111), and wherein the processing circuit (1620) is further configured to switch over to control the radio transmission over the dedicated channel in the radio transceiving part (112) from the mirrored process running on the second module (111-2).

16. The arrangement (1600) according to any of claim 14 or claim 15, wherein the radio transceiving part (112) comprises a plurality of modules (112-1, 112-2, 112-3), and wherein
the processing circuit (1620) is further configured to determine to power down at least one module (112-1, 112-2) of the radio transceiving part (112), the processing circuit (1620) is also configured to increase the transmission power on a module (112-3) of the radio transceiving part (112), which is not to be powered down, and the processing circuit (1620) is additionally configured to decrease the transmission power on the module (112-1, 112-2), which is to be powered down, until the transmission power is reduced to zero.

17. The arrangement (1600) according to any of claims 14-16, wherein
the processing circuit (1620) is further configured to power down the first module (111-1) of the controlling part (111).

## Patentansprüche

1. Verfahren in einem Netzwerkknoten (110) zum Vorbereiten eines Herunterfahrens eines ersten Moduls (111-1) von einem Steuerteil (111), das im Netzwerkknoten (110) umfasst ist, wobei der Netzwerkknoten (110) ferner ein Funksendeempfangsteil (112) umfasst, und wobei das Steuerteil (111) dazu konfiguriert ist, Prozesse zum Steuern von Funkübertragung über das Funksendeempfangsteil (112) auszuführen, wobei das Steuerteil (111) weiter ein zweites Modul (111-2) umfasst, wobei das Verfahren **gekennzeichnet ist durch**:
*Bestimmen* (1501), das erste Modul (111 -1) des Steuerteils (111) herunterzufahren,
*Identifizieren* (1502) eines Prozesses im ersten Modul (111-1), der zum Steuern der Funkübertragung über einen gemeinsamen Kanal im Funksendeempfangsteil (112) eingesetzt wird,
*Spiegeln* (1503) des identifizierten (1502) Prozesses im ersten Modul (111-1) hinüber zum zweiten Modul (111-2) des Steuerteils (111),
*Schalten* (1504) zum Steuern der Funkübertragung über den gemeinsamen Kanal im Funksendeempfangsteil (112) aus dem gespiegelten (1503) Prozess, der auf dem zweiten Modul (111-2) ausgeführt wird.

2. Verfahren nach Anspruch 1, wobei Spiegeln (1503) des identifizierten (1502) Prozesses im ersten Modul (111-1) hinüber zum zweiten Modul (111 -2) des Steuerteils (111) und Umschalten (1504) zum Steuern der Funkübertragung über den gemeinsamen Kanal im Funksendeempfangsteil (112) aus dem gespiegelten (1503) Prozess, der auf dem zweiten Modul (111-2) ausgeführt wird, Welken (*engl. wilting*) eines oder mehrerer Träger für einen gemeinsamen Kanal umfasst.

3. Verfahren nach einem von Anspruch 1 oder Anspruch 2, weiter umfassend:
*Identifizieren* (1505) eines Prozesses im ersten Modul (111-1), der zum Steuern der Funkübertragung über eine dedizierte Verbindung über einen dedizierten Kanal im Funksendeempfangsteil (112) eingesetzt wird,
*Spiegeln* (1506) des identifizierten (1505) Prozesses im ersten Modul (111-1) hinüber zum zweiten Modul (111-2) des Steuerteils (111),
*Umschalten* (1507) zum Steuern der Funkübertragung über den dedizierten Kanal im Funksendeempfangsteil (112) aus dem gespiegelten (1506) Prozess, der auf dem zweiten Modul (111-2) ausgeführt wird.

4. Verfahren nach einem der Ansprüche 1-3, wobei eine Zelle gewelkt wird, um eine dedizierte Verbindung unter Verwendung des ersten Moduls (111-1) des Steuerteils (111) entweder zum zweiten Modul (111-2) des Steuerteils (111) oder zu einem anderen Netzwerkknoten (110) zu verschieben.

5. Verfahren nach einem der Ansprüche 1-4, wobei das Funksendeempfangsteil (112) eine Vielzahl von Modulen (112-1, 112-2, 112-3) umfasst und wobei das Verfahren weiter umfasst:
*Bestimmen* (1508), mindestens ein Modul (112-1, 112-2) des Funksendeempfangsteils (112) herunterzufahren,
*Erhöhen* (1509) der Sendeleistung auf einem Modul (112-3) des Funksendeempfangsteils (112), das nicht heruntergefahren werden soll,
*Herabsetzen* (1510) der Sendeleistung auf dem Modul (112-1, 112-2), das heruntergefahren werden soll, bis die Sendeleistung auf Null reduziert ist.

6. Verfahren nach Anspruch 5, wobei ein neuer Träger in jedem Modul (112-1, 112-2) des Funksendeempfangsteils (112), das heruntergefahren werden soll, aktiviert wird.

7. Verfahren nach einem der Ansprüche 1-6, weiter umfassend *Herunterfahren* (1511) des ersten Moduls (111-1) des Steuerteils (111).

8. Verfahren nach einem der Ansprüche 1-7, weiter umfassend *Reaktivieren* (1512) eines heruntergefahren Moduls (111-1, 112-1, 112-2).

9. Verfahren nach Anspruch 8, wobei die Reaktivierung (1512) Reorganisieren der Verteilung von Prozessen, die zum Steuern der Funkübertragung über das Funksendeempfangsteil (112) zwischen dem ersten Modul (111-1), das reaktiviert werden soll, und dem zweiten Modul (111-2), das im Steuerteil (111) aktiv ist, ausgeführt werden sollen, umfasst.

10. Verfahren nach einem der Ansprüche 1-9, wobei Bestimmen (1501), das erste Modul (111-1) des Steuerteils (111) herunterzufahren, oder Bestimmen (1508), das mindestens eine Modul (112-1, 112-2) des Funksendeempfangsteils (112) herunterzufahren, weiter Alternieren der Reihenfolge, in der die Module (111-1, 111-2, 112-1, 112-2, 112-3) aktiviert oder deaktiviert werden sollen, umfasst.

11. Verfahren nach einem der Ansprüche 1-10, wobei das erste Modul (111-1) und das zweite Modul (111-2) des Steuerteils (111) beliebige der Folgenden umfasst:
separate digitale Einheiten, Kabel, Treiberschaltungen, ein oder mehrere Teile von einer oder mehreren Leiterplatten, einen oder mehrere Chips, ein oder mehrere Teile von einem oder mehreren Chips, zentrale Verarbeitungseinheiten, Speicher und/oder Verarbeitungsschaltungen.

12. Verfahren nach einem der Ansprüche 1-11, wobei das Steuerteil (111) eine Vielzahl von Modulen (111-1, 111-2), die sich auf der gleichen physischen Einheit befinden, umfasst.

13. Verfahren nach einem der Ansprüche 1-12, wobei die Entscheidung (1501), das erste Modul (111-1) des Steuerteils (111) herunterzufahren, basierend auf einem der Folgenden getroffen wird:
der Verkehrslast in einer Zelle, die durch den Netzknoten (110) versorgt wird, der Uhrzeit, dem Wochentag, der Jahreszeit, gesammelten Benutzungsstatistiken, einer von einem nicht funktionierenden Modul (111-1) empfangenen Fehlermeldung, einer Anzeige der laufenden Aktualisierung oder Neukonfiguration des Moduls (111-1).

14. Anordnung (1600) in einem Netzwerkknoten (110) zum Vorbereiten eines Herunterfahrens eines ersten Moduls (111-1) von einem Steuerteil (111), das im Netzwerkknoten (110) umfasst ist, wobei der Netzwerkknoten (110) auch ein Funksendeempfangsteil (112) umfasst und wobei das Steuerteil (111) dazu konfiguriert ist, Prozesse zum Steuern von Funkübertragung über das Funksendeempfangsteil (112) auszuführen, wobei das Steuerteil (111) weiter ein zweites Modul (111-2) umfasst, wobei die Anordnung (1600) **gekennzeichnet ist durch**:
eine Verarbeitungsschaltung (1620), die dazu konfiguriert ist, zu bestimmen, das erste Modul (111-1) des Steuerteils (111) herunterzufahren, wobei die Verarbeitungsschaltung (1620) ferner dazu konfiguriert ist, einen Prozess im ersten Modul (111-1) zu identifizieren, der zum Steuern von Funkübertragung über einen gemeinsamen Kanal im Funksendeempfangsteil (112) eingesetzt wird, die Verarbeitungsschaltung (1620) weiter dazu konfiguriert ist, den identifizierten Prozess im ersten Modul (111-1) hinüber zum zweiten Modul (111-2) des Steuerteils (111) zu spiegeln, die Verarbeitungsschaltung (1620) zusätzlich dazu konfiguriert ist, umzuschalten, um die Funkübertragung über den gemeinsamen Kanal im Funksendeempfangsteil (112) aus dem gespiegelten Prozess, der auf dem zweiten Modul (111-2) ausgeführt wird, zu steuern.

15. Anordnung (1600) nach Anspruch 14, wobei
die Verarbeitungsschaltung (1620) weiter dazu konfiguriert ist, einen Prozess im ersten Modul (111-1) zu identifizieren, der zum Steuern einer Funkübertragung über einen dedizierten Kanal im Funksendeempfangsteil (112) eingesetzt wird, die Verarbeitungsschaltung (1620) ferner dazu konfiguriert ist, den identifizierten Prozess im ersten Modul (111-1) hinüber zum zweiten Modul (111-2) des Steuerteils (111) zu spiegeln, und wobei die Verarbeitungsschaltung (1620) weiter dazu konfiguriert ist, umzuschalten, um die Funkübertragung über den dedizierten Kanal im Funksendeempfangsteil (112) aus dem gespiegelten Prozess, der auf dem zweiten Modul (111-2) ausgeführt wird, zu steuern.

16. Anordnung (1600) nach einem von Anspruch 14 oder Anspruch 15, wobei das Funksendeempfangsteil (112) eine Vielzahl von Modulen (112-1, 112-2, 112-3) umfasst und wobei
die Verarbeitungsschaltung (1620) weiter dazu konfiguriert ist, zu bestimmen, mindestens ein Modul (112-1, 112-2) des Funksendeempfangsteils (112) herunterzufahren, wobei die Verarbeitungsschaltung (1620) ferner dazu konfiguriert ist, die Sendeleistung auf einem Modul (112-3) des Funksendeempfangsteils (112), das nicht heruntergefahren werden soll, zu erhöhen, und die Verarbeitungsschaltung (1620) zusätzlich dazu konfiguriert ist, die Sendeleistung auf dem Modul (112-1, 112-2), das heruntergefahren werden soll, herabzusetzen, bis die Sendeleistung auf Null reduziert ist.

17. Anordnung (1600) nach einem der Ansprüche 14-16, wobei
die Verarbeitungsschaltung (1620) weiter dazu konfiguriert ist, das erste Modul (111-1) des Steuerteils (111) herunterzufahren.

## Revendications

1. Procédé dans un noeud réseau (110) pour la préparation de la mise hors tension d'un premier module (111-1) d'une partie de contrôle (111) comprise dans le noeud réseau (110), dans lequel le noeud réseau (110) comprend également une partie d'émission/de réception radio (112), et dans lequel la partie de contrôle (111) est configurée pour exécuter des processus de contrôle de transmission radio sur la partie d'émission/de réception radio (112), laquelle partie de contrôle (111) comprend en outre un second module (111-2), le procédé étant **caractérisé par** :
la détermination (1501) pour mettre hors tension le premier module (111-1) de la partie de contrôle (111),
l'identification (1502) d'un processus dans le premier module (111-1) qui est utilisé pour le contrôle de la transmission radio sur un canal commun dans la partie d'émission/de réception radio (112),
la mise en miroir (1503) du processus identifié (1502) dans le premier module (111-1) sur le second module (111-2) de la partie de contrôle (111),
la commutation (1504) pour contrôler la transmission radio sur le canal commun dans la partie d'émission/de réception radio (112) à partir du processus mis en miroir (1503) s'exécutant sur le second module (111-2).

2. Procédé selon la revendication 1, dans lequel la mise en miroir (1503) du processus identifié (1502) dans le premier module (111-1) sur le second module (111-2) de la partie de contrôle (111), et la commutation (1504) pour contrôler la transmission radio sur le canal commun dans la partie d'émission/de réception radio (112) à partir du processus mis en miroir (1503) s'exécutant sur le second module (111-2) comprend l'affaiblissement d'une ou plusieurs porteuses pour un canal commun.

3. Procédé selon l'une quelconque de la revendication 1 ou de la revendication 2, comprenant en outre :
l'identification (1505) d'un processus dans le premier module (111-1) qui est utilisé pour contrôler une transmission radio sur une connexion dédiée sur un canal dédié dans la partie d'émission/de réception radio (112),
la mise en miroir (1506) du processus identifié (1505) dans le premier module (111-1) sur le second module (111-2) de la partie de contrôle (111),
la commutation (1507) pour contrôler la transmission radio sur le canal dédié dans la partie d'émission/de réception radio (112) à partir du processus mis en miroir (1506) s'exécutant sur le second module (111-2).

4. Procédé selon l'une quelconque des revendications 1 à 3, dans lequel une cellule est affaiblie afin de déplacer une connexion dédiée utilisant le premier module (111-1) de la partie de contrôle (111) vers le second module (111-2) de la partie de contrôle (111), ou vers un autre noeud réseau (110).

5. Procédé selon l'une quelconque des revendications 1 à 4, dans lequel la partie d'émission/de réception radio (112) comprend une pluralité de modules (112-1, 112-2, 112-3), et dans lequel le procédé comprend en outre :
la détermination (1508) pour mettre hors tension au moins un module (112-1, 112-2) de la partie d'émission/de réception radio (112),
l'augmentation (1509) de la puissance de transmission sur un module (112-3) de la partie d'émission/de réception radio (112), qui ne doit pas être mis hors tension,
la diminution (1510) de la puissance de transmission sur le module (112-1, 112-2), qui doit être mis hors tension, jusqu'à ce que la puissance de transmission soit réduite à zéro.

6. Procédé selon la revendication 5, dans lequel une nouvelle porteuse est activée dans chaque module (112-1, 112-2) de la partie d'émission/de réception radio (112), qui doit être mis hors tension.

7. Procédé selon l'une quelconque des revendications 1 à 6, comprenant en outre :
la mise hors tension (1511) du premier module (111-1) de la partie de contrôle (111).

8. Procédé selon l'une quelconque des revendications 1 à 7, comprenant en outre :
la réactivation (1512) d'un module mis hors tension (111-1, 112-1, 112-2).

9. Procédé selon la revendication 8, dans lequel la réactivation (1512) comprend la réorganisation de la distribution des processus à exécuter pour le contrôle de la transmission radio sur la partie d'émission/de réception radio (112) entre le premier module (111-1), à réactiver et le second module (111-2), qui est actif dans la partie de contrôle (111).

10. Procédé selon l'une quelconque des revendications 1 à 9, dans lequel la détermination (1501) pour mettre hors tension le premier module (111-1) de la partie de contrôle (111), ou la détermination (1508) pour mettre hors tension au moins un module (112-1, 112-2) de la partie d'émission/de réception radio (112), comprend en outre l'alternance de l'ordre dans lequel les modules (111-1, 111-2, 112-1, 112-2, 112-3) doivent être activés, ou désactivés.

11. Procédé selon l'une quelconque des revendications 1 à 10, dans lequel le premier module (111-1) et le second module (111-2) de la partie de contrôle (111) comprennent l'un quelconque de :
unités numériques distinctes, câbles, circuits d'attaque, une ou plusieurs parties d'une ou plusieurs cartes de circuit, une ou plusieurs puces, une ou plusieurs parties d'une ou plusieurs puces, unités de traitement central, mémoires et/ou circuits de traitement.

12. Procédé selon l'une quelconque des revendications 1 à 11, dans lequel la partie de contrôle (111) comprend une pluralité de modules (111-1, 111-2) situés sur la même unité physique.

13. Procédé selon l'une quelconque des revendications 1 à 12, dans lequel la décision (1501) de mettre hors tension le premier module (111-1) de la partie de contrôle (111), est prise sur la base de l'un quelconque de :
la charge de trafic dans une cellule desservie par le noeud réseau (110), l'heure de la journée, le jour de la semaine, la période de l'année, les statistiques d'utilisation collectées, le message d'erreur reçu d'un module fonctionnant mal (111-1), l'indication de mise à niveau ou de reconfiguration en cours du module (111-1).

14. Aménagement (1600) dans un noeud réseau (110) pour la préparation de la mise hors tension d'un premier module (111-1) d'une partie de contrôle (111) comprise dans le noeud réseau (110), dans lequel le noeud réseau (110) comprend également une partie d'émission/de réception radio (112), et dans lequel la partie de contrôle (111) est configurée pour exécuter des processus pour le contrôle d'une transmission radio sur la partie d'émission/de réception radio (112), laquelle partie de contrôle (111) comprend en outre un second module (111-2), l'aménagement (1600) étant **caractérisé par** :
un circuit de traitement (1620), configuré pour déterminer de mettre hors tension le premier module (111-1) de la partie de contrôle (111), le circuit de traitement (1620) étant également configuré pour identifier un processus dans le premier module (111-1) qui est utilisé pour le contrôle d'une transmission radio sur un canal commun dans la partie d'émission/de réception radio (112), le circuit de traitement (1620) étant en outre configuré pour mettre en miroir le processus identifié dans le premier module (111-1) sur le second module (111-2) de la partie de contrôle (111), le circuit de traitement (1620) étant de plus configuré pour commuter pour contrôler la transmission radio sur le canal commun dans la partie d'émission/de réception radio (112) à partir du processus mis en miroir s'exécutant sur le second module (111-2).

15. Aménagement (1600) selon la revendication 14, dans lequel
le circuit de traitement (1620) est en outre configuré pour identifier un processus dans le premier module (111-1) qui est utilisé pour le contrôle d'une transmission radio sur un canal dédié dans la partie d'émission/de réception radio (112), le circuit de traitement (1620) étant également configuré pour mettre en miroir le processus identifié dans le premier module (111-1) sur le second module (111-2) de la partie de contrôle (111), et dans lequel le circuit de traitement (1620) est en outre configuré pour commuter pour contrôler la transmission radio sur le canal dédié dans la partie d'émission/de réception radio (112) à partir du processus mis en miroir s'exécutant sur le second module (111-2).

16. Aménagement (1600) selon l'une quelconque de la revendication 14 ou de la revendication 15, dans lequel la partie d'émission/de réception radio (112) comprend une pluralité de modules (112-1, 112-2, 112-3), et dans lequel
le circuit de traitement (1620) est en outre configuré pour déterminer pour mettre hors tension au moins un module (112-1, 112-2) de la partie d'émission/de réception radio (112), le circuit de traitement (1620) est également configuré pour augmenter la puissance de transmission sur un module (112-3) de la partie d'émission/de réception radio (112), qui ne doit pas être mis hors tension, et le circuit de traitement (1620) est de plus configuré pour diminuer la puissance de transmission sur le module (112-1, 112-2), qui doit être mis sous tension, jusqu'à ce que la puissance de transmission soit réduite à zéro.

17. Aménagement (1600) selon l'une quelconque des revendications 14 à 16, dans lequel
le circuit de traitement (1620) est en outre configuré pour mettre hors tension le premier module (111-1) de la partie de contrôle (111).
